# EUROPEAN PATENT APPLICATION

(11) **EP 4 765 955 A1**
(43) Date of publication of application: **24.06.2026**
(21) Application number: 23949338.0
(22) Date of filing: 18.08.2023
(51) Int. Cl.: H04W 40/24

(54) **PATH ESTABLISHMENT METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: MAO, Yuxin, Beijing 100085 (CN); WANG, Xinli, Beijing 100085 (CN); SHEN, Yang, Beijing 100085 (CN)
(74) Representative: Stöckeler, Ferdinand
(86) International application number: PCT/CN2023/113910
(87) International publication number: WO 2025/039144

(57) **Abstract**

The present disclosure provides a path establishment method and apparatus, a device, and a storage medium. The method comprises: a first network element determines to establish a user plane path between the first network element and an access network device, and the first network element sends a first message to a second network element and/or sends a second message to a third network element, the first message and the second message being used for requesting to establish the user plane path between the first network element and the access network device. The present disclosure provides a method for triggering a request to establish a user plane path between a first network element and an access network device, so as to successfully establish the user plane path between the first network element and the access network device, and subsequently acquiring by the first network element service data from the access network device on the basis of the user plane path, thereby improving the data transmission efficiency.

## Description

### TECHNICAL FIELD

The disclosure relates to the field of communication technologies, and in particular to a path establishment method and apparatus, a communication device, a communication system and a storage medium.

### BACKGROUND

In communication systems, core network elements typically need to obtain service data (such as network assistance data) from access network devices.

### SUMMARY

The present disclosure provides a path establishment method and apparatus, a communication device, a communication system and a storage medium.

According to a first aspect of embodiments of the present disclosure, a path establishment method is provided. The method is performed by a first network element, and includes:
determining, by the first network element, to establish a user plane path between the first network element and an access network device, and sending, by the first network element, a first message to a second network element and/or a second message to a third network element, wherein the first message and the second message are configured to request establishing the user plane path between the first network element and the access network device.

According to a second aspect of embodiments of the present disclosure, a path establishment method is provided. The method is performed by a second network element, and includes:
receiving, by the second network element, a first message sent by a first network element and/or a first request sent by a third network element, wherein the first message and the first request are configured to indicate to establish a user plane path between the first network element and an access network device;
determining, by the second network element, a fourth network element according to the first message and/or the first request, wherein the fourth network element is configured to provide a user plane function; and
sending, by the second network element, fourth information to the access network device via the third network element, wherein the fourth information includes identification information of the user plane path and/or core network tunnel information of the fourth network element, and the core network tunnel information of the fourth network element indicates the fourth network element.

According to a third aspect of embodiments of the present disclosure, a path establishment method is provided. The method is performed by a third network element, and includes at least one of:
receiving third information sent by a first network element, and sending the third information to an access network device, wherein the third information includes at least one of second information, user plane information of the first network element, or identification information of a user plane path, wherein the second information is configured to request data associated with a first service, and the third information is configured to request the access network device to transmit data requested by the second information via the user plane path; or
sending a fourth message to an access network device, wherein the fourth message includes at least one of user plane information of a first network element, second information, or identification information of a user plane path, and the fourth message is configured to request the access network device to transmit data requested by the second information via the user plane path.

According to a fourth aspect of embodiments of the present disclosure, a path establishment method is provided. The method is performed by an access network device, and includes:
receiving third information sent by a first network element and/or a fourth message sent by a third network element, wherein the third information includes at least one of second information, user plane information of the first network element, or identification information of a user plane path, the fourth message includes at least one of user plane information of the first network element, second information or identification information of a user plane path, wherein the second information is configured to request data associated with a first service, and the third information and the fourth message are configured to request the access network device to transmit data requested by the second information via a user plane path;
determining service data of the first service, and packaging the service data of the first service into a service data packet; and
sending the service data packet to the first network element via the user plane path.

According to a fifth aspect of embodiments of the present disclosure, a path establishment method is provided. The method is applied in a communication system. The communication system includes an access network device, a first network element, a second network element, a third network element and a fourth network element, and the method includes at least one of:
determining by the first network element, to establish a user plane path between the first network element and the access network device, and sending by the first network element, a first message to the second network element, wherein the first message is configured to request establishment of the user plane path between the first network element and the access network device;
determining by the second network element, the fourth network element according to the first message, wherein the fourth network element is configured to provide a user plane function;
sending by the second network element, fourth information to the third network element, wherein the fourth information includes identification information of the user plane path and/or core network tunnel information of the fourth network element, and the core network tunnel information of the fourth network element indicates the fourth network element;
receiving by the third network element, the fourth information sent by the second network element;
sending by the third network element, the fourth information to the access network device;
receiving by the access network device, the fourth information sent by the third network element;
sending by the access network device, fifth information to the third network element, wherein the fifth information includes identification information of the user plane path and/or access network tunnel information of the access network device, and the access network tunnel information indicates user plane path information of the access network device;
receiving by the third network element, the fifth information;
sending by the third network element, the fifth information to the second network element;
receiving by the second network element, the fifth information sent by the third network element;
sending by the second network element, a third message to the fourth network element, wherein the third message is configured to provide the access network tunnel information and/or the identification information of the user plane path to the fourth network element, for establishing the user plane path with the access network device;
sending by the second network element, a first response to the first network element, wherein the first response includes at least one of second indication information, information of the access network device, the identification information of the user plane path, or address information of a user plane path of the access network device, wherein the second indication information indicates that the user plane path between the first network element and the access network device is accepted;
receiving by the first network element, the first response;
sending by the first network element, third information to the access network device via the user plane path and/or a control plane path, wherein the third information includes at least one of second information, user plane information of the first network element, or identification information of the user plane path;
receiving by the access network device, the third information sent by the first network element;
determining by the access network device, service data of a first service, and packaging the service data of the first service into a service data packet, wherein the service data packet includes a destination address of the service data packet packaged using the user plane information of the first network element, or the service data packet does not include a destination address of the service data packet packaged using the user plane information of the first network element;
sending by the access network device, the service data packet to the first network element via the user plane path;
receiving by the first network element, the service data packet sent by the access network device via the user plane path.

According to a sixth aspect of embodiments of the present disclosure, a path establishment method is provided. The method is applied in a communication system. The communication system includes an access network device, a first network element, a second network element, a third network element, and a fourth network element, and the method includes at least one of:
determining by the first network element, to establish a user plane path between the first network element and the access network device, and sending by the first network element, a second message to the third network element, wherein the second message is configured to request establishment of the user plane path between the first network element and the access network device;
receiving by the third network element, the second message;
sending by the third network element, a first request to the second network element, wherein the first request is configured to indicate to establish the user plane path between the first network element and the access network device;
determining by the second network element, the fourth network element according to the first request, wherein the fourth network element is configured to provide a user plane function;
sending by the second network element, fourth information to the third network element, wherein the fourth information includes identification information of the user plane path and/or core network tunnel information of the fourth network element, and the core network tunnel information of the fourth network element indicates the fourth network element;
receiving by the third network element, the fourth information sent by the second network element;
sending by the third network element, the fourth information to the access network device;
receiving by the access network device, the fourth information sent by the third network element;
sending by the access network device, fifth information to the third network element, wherein the fifth information includes identification information of the user plane path and/or access network tunnel information of the access network device, and the access network tunnel information indicates user plane path information of the access network device;
receiving by the third network element, the fifth information;
sending by the third network element, the fifth information to the second network element;
receiving by the second network element, the fifth information sent by the third network element;
sending by the second network element, a third message to the fourth network element, wherein the third message is configured to provide the access network tunnel information and/or the identification information of the user plane path to the fourth network element, for establishing the user plane path with the access network device;
sending by the second network element, a second response to the third network element, wherein the second response includes at least one of second indication information, information of the access network device, the identification information of the user plane path, or address information of a user plane path of the access network device, wherein the second indication information indicates that the user plane path between the first network element and the access network device is accepted;
receiving by the third network element, the second response;
sending by the third network element, a fourth message to the access network device, wherein the fourth message includes at least one of second information, user plane information of the first network element, or identification information of the user plane path, wherein the second information is configured to request data associated with a first service;
determining by the access network device, service data of the first service, and packaging the service data of the first service into a service data packet, wherein the service data packet includes a destination address of the service data packet packaged using the user plane information of the first network element, or the service data packet does not include a destination address of the service data packet packaged using the user plane information of the first network element;
sending by the access network device, the service data packet to the first network element via the user plane path;
receiving by the first network element, the service data packet sent by the access network device via the user plane path.

According to a seventh aspect of embodiments of the present disclosure, a first network element is provided, including:
a sending module, configured to determine to establish a user plane path between the first network element and an access network device, and send a first message to a second network element and/or a second message to a third network element, wherein the first message and the second message are configured to request establishing the user plane path between the first network element and the access network device.

According to an eighth aspect of embodiments of the present disclosure, a second network element is provided, including:
a receiving module, configured to receive a first message sent by a first network element and/or a first request sent by a third network element, wherein the first message and the first request are configured to indicate to establish a user plane path between the first network element and an access network device;
a processing module, configured to determine a fourth network element according to the first message and/or the first request, wherein the fourth network element is configured to provide a user plane function; and
a sending module, configured to send fourth information to the access network device via a third network element, wherein the fourth information includes identification information of the user plane path and/or core network tunnel information of the fourth network element, and the core network tunnel information of the fourth network element indicates the fourth network element.

According to a ninth aspect of embodiments of the present disclosure, a third network element is provided, including:
a receiving module, configured to receive third information sent by a first network element, and send the third information to an access network device, wherein the third information includes at least one of second information, user plane information of the first network element, or identification information of a user plane path, wherein the second information is configured to request data associated with a first service, and the third information is configured to request the access network device to transmit data requested by the second information via the user plane path; and
a sending module, configured to send a fourth message to an access network device, wherein the fourth message includes at least one of user plane information of a first network element, second information, or identification information of a user plane path, and the fourth message is configured to request the access network device to transmit data requested by the second information via the user plane path.

According to a tenth aspect of embodiments of the present disclosure, an access network device is provided, including:
a receiving module, configured to receive third information sent by a first network element and/or a fourth message sent by a third network element, wherein the third information includes at least one of second information, user plane information of the first network element, or identification information of a user plane path, the fourth message includes at least one of user plane information of the first network element, second information or identification information of a user plane path, wherein the second information is configured to request data associated with a first service, and the third information and the fourth message are configured to request the access network device to transmit data requested by the second information via a user plane path;
a processing module, configured to determine service data of the first service, and packaging the service data of the first service into a service data packet; and
a sending module, configured to send the service data packet to the first network element via the user plane path.

According to an eleventh aspect of embodiments of the present disclosure, a communication device is provided, including:
one or more processors;
wherein, the processor is configured to call instructions to cause the communication device to implement the path establishment method of any of the first aspect to the fourth aspect.

According to a twelfth aspect of embodiments of the present disclosure, a communication system is provided, including a first network element, a second network element, a third network element, and an access network device, wherein the first network element is configured to implement the path establishment method described in the first aspect, the second network element is configured to implement the path establishment method described in the second aspect, the third network element is configured to implement the path establishment method described in the third aspect, and the access network device is configured to implement the path establishment method described in the fourth aspect.

According to a thirteenth aspect of embodiments of the present disclosure, a storage medium is provided. The storage medium stores instructions. When the instructions are executed on a communication device, the communication device is caused to implement the path establishment method of any of the first aspect to the fourth aspect.

### BRIEF DESCRIPTION OF THE DRAWINGS

The above-mentioned and/or additional aspects and advantages of the disclosure will become apparent and readily appreciated from the following description of embodiments in conjunction with the accompanying figures.
FIG. 1A is a schematic diagram illustrating an architecture of a communication system according to embodiments of the disclosure.
FIG. 1B is a flowchart of a method for "obtaining service data from an access network device by a core network element" provided in the related art;
FIG. 1C is a flowchart of a method for "establishing a user plane path between a terminal and an LMF to achieve positioning" provided in the related art;
FIG. 2A-FIG. 2C are schematic diagrams illustrating interaction in a path establishment method provided in an embodiment of the present disclosure.
FIG. 3A-FIG. 3D are schematic flowcharts of a path establishment method provided in another embodiment of the present disclosure.
FIG. 4A-FIG. 4C are schematic flowcharts of a path establishment method provided in another embodiment of the present disclosure.
FIG. 5A-FIG. 5D are schematic flowcharts of a path establishment method provided in another embodiment of the present disclosure.
FIG. 6A-FIG. 6C are schematic flowcharts of a path establishment method provided in another embodiment of the present disclosure.
FIG. 7A-FIG. 7D are schematic flowcharts of a path establishment method provided in another embodiment of the present disclosure.
FIG. 8A is a block diagram of a first network element provided in an embodiment of the present disclosure.
FIG. 8B is a block diagram of a second network element provided in an embodiment of the present disclosure.
FIG. 8C is a block diagram of a third network element provided in an embodiment of the present disclosure.
FIG. 8D is a block diagram of an access network device provided in an embodiment of the present disclosure.
FIG. 9A is a block diagram of a communication device provided in an embodiment of the present disclosure.
FIG. 9B is a block diagram of a chip provided in an embodiment of the present disclosure.

### DETAILED DESCRIPTION

Embodiments of the present disclosure provide a path establishment method and apparatus, a communication device, a communication system and a storage medium.

In a first aspect, embodiments of the present disclosure provide a path establishment method, performed by a first network element. The method includes:
determining, by the first network element, to establish a user plane path between the first network element and an access network device, and sending, by the first network element, a first message to a second network element and/or a second message to a third network element, wherein the first message and the second message are configured to request establishing the user plane path between the first network element and the access network device.

In the above embodiment, when the first network element determines to establish a user plane path between the first network element and the access network device, the first network element will send a first message to the second network element and/or a second message to the third network element to request establishment of the user plane path between the first network element and the access network device. From this, it can be seen that embodiments of the present disclosure provide a method for triggering a request to establish a user plane path between the first network element and the access network device, for successfully establishing a user plane path between the first network element and the access network device, and for the first network element to subsequently obtain service data from the access network device based on the user plane path, thereby improving the efficiency of data transmission.

In combination with some embodiments of the first aspect, in some embodiments, determining to establish the user plane path between the first network element and the access network device includes:
receiving first information, wherein the first information is associated with a first service; and
determining whether to establish the user plane path between the first network element and the access network device according to at least one of the first information, a capability of the access network device, a network congestion status, or a capability of a core network.

In combination with some embodiments of the first aspect, in some embodiments, the first information includes at least one of:
access network device information, wherein the access network device information indicates a target access network device of the first service;
service area information, wherein the service area information indicates a target area of the first service;
service location information, wherein the service location information indicates a target location of the first service;
a requested service data type of the first service; or
requested quality of service (QoS) information of service data of the first service.

In the above embodiment, a method is provided for the first network element to determine whether to establish a user plane path between the first network element and an access network device. When the first network element determines that a user plane path needs to be established between the first network element and the access network device, the first network element can trigger a process for establishing the user plane path between the first network element and the access network device, thereby successfully establishing the user plane path between the first network element and the access network device. This facilitates the first network element to obtain service data subsequently from the access network device based on the user plane path, and improves data transmission efficiency.

In combination with some embodiments of the first aspect, in some embodiments, the first message includes at least one of:
first indication information, wherein the first indication information indicates to establish the user plane path between the first network element and the access network device;
information of the access network device;
service area information, wherein the service area information indicates a target area of a first service;
service location information, wherein the service location information indicates a target location of a first service;
user plane information of the first network element; or
identification information of the user plane path.

In combination with some embodiments of the first aspect, in some embodiments, the user plane information of the first network element includes at least one of:
a network element identifier (ID) of the first network element; or
an Internet protocol (IP) address of the first network element.

In combination with some embodiments of the first aspect, in some embodiments, the identification information of the user plane path includes:
a packet data unit (PDU) session ID corresponding to the user plane path; or
a user plane path ID corresponding to the user plane path.

In combination with some embodiments of the first aspect, in some embodiments, the information of the access network device includes at least one of:
an identifier of the access network device;
an IP address of the access network device;
single network slice selection assistance information (S-NSSAI) supported by the access network device;
a cell identity (CI) list supported by the access network device; or
a tracking area identifier (TAI) list supported by the access network device.

In combination with some embodiments of the first aspect, in some embodiments, the second message includes at least one of:
first indication information, wherein the first indication information indicates to establish the user plane path between the first network element and the access network device;
information of the access network device;
service area information, wherein the service area information indicates a target area of a first service;
service location information, wherein the service location information indicates a target location of a first service;
user plane information of the first network element;
second information, wherein the second information is configured to request data associated with a first service; or
identification information of the user plane path.

In the above embodiments, the first message and the second message may include one or more of access network device information, service area information, service location information, user plane information of the first network element, and identification information of the user plane path. The access network device information can be used to indicate the target access network device for the first service. The service area information and/or service location information can be used to determine the target access network device. Based on the access network device information, the service area information, and the service location information, the specific access network device that the first network element needs to establish a user plane path with can be determined. Additionally, the user plane information of the first network element can indicate the first network element, thereby specifying which first network element needs to establish a user plane path with the target access network device. This clarifies the devices at both ends of the user plane path, ensuring the accurate establishment of the user plane path. Moreover, corresponding identification information is allocated for the user plane path established between the first network element and the access network device, to identify the user plane path. This facilitates subsequent management of transmission over the user plane path based on its identification information, ensuring communication stability. Furthermore, the second message may also include second information, which is used to request data related to the first service. Once the user plane path is successfully established, the third network element can directly use the second information in the second message to request data related to the first service from the access network device, eliminating the step of "the first network element requesting data from the access network device via the third network element." This reduces the communication process and improves communication efficiency.

In combination with some embodiments of the first aspect, in some embodiments, the method further includes:
receiving a first response sent by the second network element and/or the third network element, wherein the first response includes at least one of:
second indication information, wherein the second indication information indicates that the user plane path between the first network element and the access network device is accepted;
information of the access network device;
identification information of the user plane path; or
address information of a user plane path of the access network device.

In combination with some embodiments of the first aspect, in some embodiments, the method further includes at least one of:
sending third information to the access network device, wherein the third information includes at least one of second information, user plane information of the first network element, or identification information of the user plane path; or
receiving a service data packet sent by the access network device via the user plane path.

In combination with some embodiments of the first aspect, in some embodiments, sending the third information to the access network device includes:
sending the third information to the access network device via the user plane path and/or a control plane path.

In combination with some embodiments of the first aspect, in some embodiments, sending the third information to the access network device via the control plane path includes:
sending the third information to the access network device via the third network element.

In the above embodiments, after the user plane path is successfully established, the second network element and/or the third network element send the first response to the first network element to indicate the successful establishment of the user plane path. The first response may include: second indication information, information of the access network device, identification information of the user plane path, and address information of the user plane path of the access network device. The second indication information is used to indicate that the user plane path between the first network element and the access network device is accepted. The information of the access network device and/or the address information of the user plane path of the access network device is used to indicate the target access network device connected by the user plane path. The identification information of the user plane path is used to identify the user plane path. Thus, the first network element can send third information to the target access network device based on the first response, requesting data related to the first service, so that the access network device can subsequently provide the data related to the first service to the first network element via the user plane path, thereby improving data transmission efficiency.

In a second aspect, embodiments of the present disclosure provide a path establishment method, performed by a network device. The method includes:
receiving, by the second network element, a first message sent by a first network element and/or a first request sent by a third network element, wherein the first message and the first request are configured to indicate to establish a user plane path between the first network element and an access network device;
determining, by the second network element, a fourth network element according to the first message and/or the first request, wherein the fourth network element is configured to provide a user plane function; and
sending, by the second network element, fourth information to the access network device via the third network element, wherein the fourth information includes identification information of the user plane path and/or core network tunnel information of the fourth network element, and the core network tunnel information of the fourth network element indicates the fourth network element.

In the above embodiments, when the second network element receives the first message sent by the first network element and/or the first request sent by the third network element, the second network element will determine the fourth network element used to provide user plane functionality and send the fourth information to the access network device via the third network element. The fourth information includes identification information of the user plane path and/or core network tunnel information of the fourth network element, which indicates the fourth network element. After receiving the fourth information, the access network device can establish the user plane path with the first network element via the fourth network element based on the fourth information, for subsequent data transmission. From this, it can be seen that this disclosure provides a method for establishing a user plane path between the first network element and the access network device, which facilitates the first network element to obtain service data from the access network device via the user plane path and improves data transmission efficiency.

In combination with some embodiments of the second aspect, in some embodiments, the method further includes:
determining a user plane path identifier (ID) corresponding to the user plane path; and
creating a context, wherein the context is configured to store related information of the user plane path, and the user plane path is associated with at least one of a data network name (DNN) of a first service, single network slice selection assistance information (S-NSSAI) of a first service, or the access network device.

In combination with some embodiments of the second aspect, in some embodiments, the context includes:
a context related to the user plane path; or
a PDU session context corresponding to the user plane path.

In combination with some embodiments of the second aspect, in some embodiments, the first request includes at least one of:
identification information of the user plane path;
information of the access network device;
service area information, wherein the service area information indicates a target area of a first service;
service location information, wherein the service location information indicates a target location of a first service; or
user plane information of the first network element.

In combination with some embodiments of the second aspect, in some embodiments, the fourth information further includes at least one of:
information of the access network device;
service area information, wherein the service area information indicates a target area of a first service;
service location information, wherein the service location information indicates a target location of a first service;
user plane information of the first network element;
a requested quality of service (QoS) flow; or
related QoS parameters of a requested QoS flow.

In combination with some embodiments of the second aspect, in some embodiments, after determining the fourth network element, the method further includes:
establishing an N4 session with the fourth network element.

In combination with some embodiments of the second aspect, in some embodiments, before sending the fourth information to the access network device via the third network element, the method further includes:
determining the third network element according to the first message and/or the first request.

In combination with some embodiments of the second aspect, in some embodiments, the method further includes:
receiving fifth information sent by the third network element, wherein the fifth information includes identification information of the user plane path and/or access network tunnel information of the access network device, and the access network tunnel information indicates user plane path information of the access network device: and
sending a third message to the fourth network element, wherein the third message is configured to provide the access network tunnel information and/or the identification information of the user plane path to the fourth network element, for establishing the user plane path with the access network device.

In combination with some embodiments of the second aspect, in some embodiments, before receiving the fifth information sent by the third network element, the method further includes:
subscribing to the fifth information by the second network element from the third network element.

In combination with some embodiments of the second aspect, in some embodiments, the fifth information further includes first capability information, wherein the first capability information indicates whether a service data packet generated by the access network device includes a destination address of the service data packet packaged using user plane information of the first network element.

In combination with some embodiments of the second aspect, in some embodiments, the third message further includes a forwarding rule, wherein the forwarding rule indicates a rule for the fourth network element to forward the service data packet, and the forwarding rule is determined based on the first capability information.

In combination with some embodiments of the second aspect, in some embodiments, the forwarding rule includes at least one of:
a first rule, wherein the first rule indicates to forward a service data packet associated with a QoS flow identifier (QFI); or
a second rule, wherein the second rule indicates to forward a service data packet according to a destination address of the service data packet.

In combination with some embodiments of the second aspect, in some embodiments, before sending the third message to the fourth network element, the method further includes:
determining that the forwarding rule is the first rule in a case where the first capability information indicates that the service data packet generated by the access network device does not include the destination address of the service data packet packaged using the user plane information of the first network element;
determining that the forwarding rule is the second rule in a case where the first capability information indicates that the service data packet generated by the access network device includes the destination address of the service data packet packaged using the user plane information of the first network element.

In the above embodiments, when a user plane path is established between the access network device and the first network element, the access network device provides service data to the first network element via the user plane path, which is forwarded by the fourth network element. Specifically, the access network device generates the service data packet and sends the service data packet to the fourth network element, which forwards the service data packet to the first network element. The fourth network element usually needs to determine which first network element the destination address of the service data packet is when forwarding the service data packet sent by the access network device. However, the service data packet is generated and packaged by the access network device, and whether the destination address is included in the service data packet is determined by the packaging capability of the access network device. Based on this, in some embodiments, the access network device can send the first capability information to the second network element via the third network element. The first capability information is used to indicate the packaging capability of the access network device, that is, whether the service data packet generated by the access network device includes the destination address of the service data packet packaged using the user plane information of the first network element. The second network element can determine the forwarding rule of the fourth network element based on the first capability information. Specifically, when the first capability information indicates that the service data packet generated by the access network device does not include the destination address of the service data packet packaged using the user plane information of the first network element, the second network element determines the forwarding rule as the first rule, which is forwarding the service data packet associated with the QoS Flow Identifier (QFI) (i.e. forwarding the service data packet associated with the QFI directly to the first network element without a need for the destination address); when the first capability information indicates that the service data packet generated by the access network device includes the destination address of the service data packet packaged with the user plane information of the first network element, the second network element determines the forwarding rule as the second rule, which is to forward the service data packet based on the destination address of the service data packet. Afterwards, the second network element will send the forwarding rule to the fourth network element, so that the fourth network element can successfully forward the service data packet of the user plane path based on the forwarding rule, ensuring the stability and accuracy of the data transmission of the user plane path.

Furthermore, in some embodiments, when generating the service data packet, the access network device may also package the service data of the first service into the service data packet based on the first capability information (i.e. the packaging capability of the access network device) and whether the access network device knows the user plane information of the first network element. Optionally, when the access network device is not aware of the user plane information of the first network element and/or the first capability information indicates that the data packet generated by the access network device does not include the destination address of the first service data packet packaged using the user plane information of the first network element, then the service data packet generated by the access network device does not include the destination address of the service data packet packaged using the user plane information of the first network element. When the access network device obtains the user plane information of the first network element and the first capability information indicates that the data packet generated by the access network device includes the destination address of the first service data packet packaged with the user plane information of the first network element, then the service data packet generated by the access network device includes the destination address of the service data packet packaged with the user plane information of the first network element.

In combination with some embodiments of the second aspect, in some embodiments, the method further includes:
sending a first response to the first network element, wherein the first response includes at least one of:
second indication information, wherein the second indication information indicates that the user plane path between the first network element and the access network device is accepted;
information of the access network device;
identification information of the user plane path; or
address information of a user plane path of the access network device.

In combination with some embodiments of the second aspect, in some embodiments, the method further includes:
sending a second response to the third network element, wherein the second response includes at least one of:
second indication information, wherein the second indication information indicates that the user plane path between the first network element and the access network device is accepted;
information of the access network device;
identification information of the user plane path; or
address information of a user plane path of the access network device.

In a third aspect, embodiments of the present disclosure provide a path establishment method, performed by a third network element. The method includes at least one of:
receiving third information sent by a first network element, and sending the third information to an access network device, wherein the third information includes at least one of second information, user plane information of the first network element, or identification information of a user plane path, wherein the second information is configured to request data associated with a first service, and the third information is configured to request the access network device to transmit data requested by the second information via the user plane path; or
sending a fourth message to an access network device, wherein the fourth message includes at least one of user plane information of a first network element, second information, or identification information of a user plane path, and the fourth message is configured to request the access network device to transmit data requested by the second information via the user plane path.

In the above embodiments, the third network element receives the third information sent by the first network element and sends the third information to the access network device, and/or the third network element sends the fourth message to the access network device, wherein the third information and/or the fourth message can be used to request the access network device to transmit the data requested by the second information via the user plane path, so that the access network device can subsequently send the data related to the first service to the first network element via the user plane path. From this, it can be seen that this disclosure provides a method for enabling the access network device to provide data to the first network element via a user plane path, which improves the efficiency of data transmission.

In combination with some embodiments of the third aspect, in some embodiments, the method further includes: receiving, by the third network element, fourth information sent by a second network element, wherein the fourth information includes identification information of the user plane path and/or core network tunnel information of the fourth network element, the core network tunnel information of the fourth network element indicates the fourth network element, and the fourth information is configured to establish the user plane path between the first network element and the access network device; and
sending, by the third network element, the fourth information to the access network device.

In combination with some embodiments of the third aspect, in some embodiments, the fourth information further includes at least one of:
information of the access network device;
service area information, wherein the service area information indicates a target area of a first service;
service location information, wherein the service location information indicates a target location of a first service;
user plane information of the first network element;
a requested QoS flow; or
related QoS parameters of a requested QoS flow.

In combination with some embodiments of the third aspect, in some embodiments, the method further includes:
receiving fifth information sent by the access network device, wherein the fifth information includes identification information of the user plane path and/or access network tunnel information of the access network device, the access network tunnel information indicates user plane path information of the access network device, and the fifth information is configured to establish the user plane path between the first network element and the access network device; and
sending the fifth information to the third network element.

In combination with some embodiments of the third aspect, in some embodiments, before receiving by the third network element, the fourth information sent by the second network element, the method further includes:
receiving a second message sent by the first network element, wherein the second message is configured to request establishment of the user plane path between the first network element and the access network device; and
sending a first request to the second network element, wherein the first request is configured to indicate to establish the user plane path between the first network element and the access network device.

In combination with some embodiments of the third aspect, in some embodiments, the method further includes:
receiving a second response sent by the second network element, wherein the second response includes at least one of:
second indication information, wherein the second indication information indicates that the user plane path between the first network element and the access network device is accepted;
information of the access network device;
identification information of the user plane path; or
address information of the user plane path.

In combination with some embodiments of the third aspect, in some embodiments, the method further includes:
sending a first response to the first network element, wherein the first response includes at least one of:
second indication information, wherein the second indication information indicates that the user plane path between the first network element and the access network device is accepted;
information of the access network device;
identification information of the user plane path; or
address information of the user plane path.

In a fourth aspect, embodiments of the present disclosure provide a path establishment method, performed by an access network device. The method includes:
receiving third information sent by a first network element and/or a fourth message sent by a third network element, wherein the third information includes at least one of second information, user plane information of the first network element, or identification information of a user plane path, the fourth message comprises at least one of user plane information of the first network element, second information or identification information of a user plane path, wherein the second information is configured to request data associated with a first service, and the third information and the fourth message are configured to request the access network device to transmit data requested by the second information via a user plane path;
determining service data of the first service, and packaging the service data of the first service into a service data packet;
sending the service data packet to the first network element via the user plane path; and
sending the service data packet to the first network element via the user plane path.

In the above embodiments, the access network device receives the third information sent by the first network element and/or the fourth message sent by the third network element. The third information and/or the fourth message can be used to request the access network device to transmit the data requested by the second information via the user plane path. Afterwards, the access network device determines the service data of the first service, packages the service data of the first service into the service data packet, and then sends the service data packet to the first network element via the user plane path. From this, it can be seen that the present disclosure provides a method for the access network device to provide data to the first network element via the user plane path, which improves the efficiency of data transmission.

In combination with some embodiments of the fourth aspect, in some embodiments, the method further includes:
receiving, by the access network device, fourth information sent by a third network element, wherein the fourth information includes identification information of a user plane path and/or core network tunnel information of a fourth network element, the core network tunnel information of the fourth network element indicates the fourth network element, and the fourth information is configured to establish the user plane path between the first network element and the access network device;
sending fifth information to the third network element, wherein the fifth information includes the identification information of the user plane path and/or access network tunnel information of the access network device, wherein the access network tunnel information indicates user plane path information of the access network device, and the fifth information is configured to establish the user plane path between the first network element and the access network device.

In combination with some embodiments of the fourth aspect, in some embodiments, the fifth information further includes first capability information, wherein the first capability information is configured to indicate whether a service data packet generated by the access network device includes a destination address of the service data packet packaged using the user plane information of the first network element.

In combination with some embodiments of the fourth aspect, in some embodiments, the service data packet includes a destination address of the service data packet packaged using the user plane information of the first network element, or the service data packet does not include a destination address of the service data packet packaged using the user plane information of the first network element.

In combination with some embodiments of the fourth aspect, in some embodiments, receiving the third information sent by the first network element includes:
receiving the third information sent by the first network element via the user plane path and/or a control plane path.

In combination with some embodiments of the fourth aspect, in some embodiments, receiving the third information sent by the first network element via the control plane path includes:
receiving the third information sent by the first network element via the third network element.

In a fifth aspect, embodiments of the present disclosure provide a path establishment method, applied in a communication system. The communication system includes an access network device, a first network element, a second network element, a third network element and a fourth network element, and the method includes at least one of:
determining by the first network element, to establish a user plane path between the first network element and the access network device, and sending by the first network element, a first message to the second network element, wherein the first message is configured to request establishment of the user plane path between the first network element and the access network device;
determining by the second network element, the fourth network element according to the first message, wherein the fourth network element is configured to provide a user plane function;
sending by the second network element, fourth information to the third network element, wherein the fourth information includes identification information of the user plane path and/or core network tunnel information of the fourth network element, and the core network tunnel information of the fourth network element indicates the fourth network element;
receiving by the third network element, the fourth information sent by the second network element;
sending by the third network element, the fourth information to the access network device;
receiving by the access network device, the fourth information sent by the third network element;
sending by the access network device, fifth information to the third network element, wherein the fifth information includes identification information of the user plane path and/or access network tunnel information of the access network device, and the access network tunnel information indicates user plane path information of the access network device;
receiving by the third network element, the fifth information;
sending by the third network element, the fifth information to the second network element;
receiving by the second network element, the fifth information sent by the third network element;
sending by the second network element, a third message to the fourth network element, wherein the third message is configured to provide the access network tunnel information and/or the identification information of the user plane path to the fourth network element, for establishing the user plane path with the access network device;
sending by the second network element, a first response to the first network element, wherein the first response includes at least one of second indication information, information of the access network device, the identification information of the user plane path, or address information of a user plane path of the access network device, wherein the second indication information indicates that the user plane path between the first network element and the access network device is accepted;
receiving by the first network element, the first response;
sending by the first network element, third information to the access network device via the user plane path and/or a control plane path, wherein the third information includes at least one of second information, user plane information of the first network element, or identification information of the user plane path;
receiving by the access network device, the third information sent by the first network element;
determining by the access network device, service data of a first service, and packaging the service data of the first service into a service data packet, wherein the service data packet includes a destination address of the service data packet packaged using the user plane information of the first network element, or the service data packet does not include a destination address of the service data packet packaged using the user plane information of the first network element;
sending by the access network device, the service data packet to the first network element via the user plane path;
receiving by the first network element, the service data packet sent by the access network device via the user plane path.

In a sixth aspect, embodiments of the present disclosure provide a path establishment method, applied in a communication system. The communication system includes an access network device, a first network element, a second network element, a third network element, and a fourth network element, and the method includes at least one of:
determining by the first network element, to establish a user plane path between the first network element and the access network device, and sending by the first network element, a second message to the third network element, wherein the second message is configured to request establishment of the user plane path between the first network element and the access network device;
receiving by the third network element, the second message;
sending by the third network element, a first request to the second network element, wherein the first request is configured to indicate to establish the user plane path between the first network element and the access network device;
determining by the second network element, the fourth network element according to the first request, wherein the fourth network element is configured to provide a user plane function;
sending by the second network element, fourth information to the third network element, wherein the fourth information includes identification information of the user plane path and/or core network tunnel information of the fourth network element, and the core network tunnel information of the fourth network element indicates the fourth network element;
receiving by the third network element, the fourth information sent by the second network element;
sending by the third network element, the fourth information to the access network device;
receiving by the access network device, the fourth information sent by the third network element;
sending by the access network device, fifth information to the third network element, wherein the fifth information includes identification information of the user plane path and/or access network tunnel information of the access network device, and the access network tunnel information indicates user plane path information of the access network device;
receiving by the third network element, the fifth information;
sending by the third network element, the fifth information to the second network element;
receiving by the second network element, the fifth information sent by the third network element;
sending by the second network element, a third message to the fourth network element, wherein the third message is configured to provide the access network tunnel information and/or the identification information of the user plane path to the fourth network element, for establishing the user plane path with the access network device;
sending by the second network element, a second response to the third network element, wherein the second response includes at least one of second indication information, information of the access network device, the identification information of the user plane path, or address information of a user plane path of the access network device, wherein the second indication information indicates that the user plane path between the first network element and the access network device is accepted;
receiving by the third network element, the second response;
sending by the third network element, a fourth message to the access network device, wherein the fourth message includes at least one of second information, user plane information of the first network element, or identification information of the user plane path, wherein the second information is configured to request data associated with a first service;
determining by the access network device, service data of the first service, and packaging the service data of the first service into a service data packet, wherein the service data packet includes a destination address of the service data packet packaged using the user plane information of the first network element, or the service data packet does not comprise a destination address of the service data packet packaged using the user plane information of the first network element;
sending by the access network device, the service data packet to the first network element via the user plane path;
receiving by the first network element, the service data packet sent by the access network device via the user plane path.

In a seventh aspect, embodiments of the present disclosure provide a first network element, including:
a sending module, configured to determine to establish a user plane path between the first network element and an access network device, and send a first message to a second network element and/or a second message to a third network element, wherein the first message and the second message are configured to request establishing the user plane path between the first network element and the access network device.

In combination with some embodiments of the seventh aspect, in some embodiments, the first network element is further configured to:
receive first information, wherein the first information is associated with a first service; and
determine whether to establish the user plane path between the first network element and the access network device according to at least one of the first information, a capability of the access network device, a network congestion status, or a capability of a core network.

In combination with some embodiments of the seventh aspect, in some embodiments, the first information includes at least one of:
access network device information, wherein the access network device information indicates a target access network device of the first service;
service area information, wherein the service area information indicates a target area of the first service;
service location information, wherein the service location information indicates a target location of the first service;
a requested service data type of the first service; or
requested quality of service (QoS) information of service data of the first service.

In combination with some embodiments of the seventh aspect, in some embodiments, the first message includes at least one of:
first indication information, wherein the first indication information indicates to establish the user plane path between the first network element and the access network device;
information of the access network device;
service area information, wherein the service area information indicates a target area of a first service;
service location information, wherein the service location information indicates a target location of a first service;
user plane information of the first network element; or
identification information of the user plane path.

In combination with some embodiments of the seventh aspect, in some embodiments, the user plane information of the first network element includes at least one of:
a network element identifier (ID) of the first network element; or
an Internet protocol (IP) address of the first network element.

In combination with some embodiments of the seventh aspect, in some embodiments, the identification information of the user plane path includes:
a packet data unit (PDU) session ID corresponding to the user plane path; or
a user plane path ID corresponding to the user plane path.

In combination with some embodiments of the seventh aspect, in some embodiments, the information of the access network device includes at least one of:
an identifier of the access network device;
an IP address of the access network device;
single network slice selection assistance information (S-NSSAI) supported by the access network device;
a cell identity (CI) list supported by the access network device; or
a tracking area identifier (TAI) list supported by the access network device.

In combination with some embodiments of the seventh aspect, in some embodiments, the second message includes at least one of:
first indication information, wherein the first indication information indicates to establish the user plane path between the first network element and the access network device;
information of the access network device;
service area information, wherein the service area information indicates a target area of a first service;
service location information, wherein the service location information indicates a target location of a first service;
user plane information of the first network element;
second information, wherein the second information is configured to request data associated with a first service; or
identification information of the user plane path.

In combination with some embodiments of the seventh aspect, in some embodiments, the first network element is further configured to:
receive a first response sent by the second network element and/or the third network element, wherein the first response includes at least one of:
second indication information, wherein the second indication information indicates that the user plane path between the first network element and the access network device is accepted;
information of the access network device;
identification information of the user plane path; or
address information of a user plane path of the access network device.

In combination with some embodiments of the seventh aspect, in some embodiments, the first network element is further configured for at least one of:
sending third information to the access network device, wherein the third information includes at least one of second information, user plane information of the first network element, or identification information of the user plane path; or
receiving a service data packet sent by the access network device via the user plane path.

In combination with some embodiments of the seventh aspect, in some embodiments, the first network element is further configured to:
send the third information to the access network device via the user plane path and/or a control plane path.

In combination with some embodiments of the seventh aspect, in some embodiments, the first network element is further configured to:
send the third information to the access network device via the third network element.

In an eighth aspect, embodiments of the present disclosure provide a second network element, including:
a receiving module, configured to receive a first message sent by a first network element and/or a first request sent by a third network element, wherein the first message and the first request are configured to indicate to establish a user plane path between the first network element and an access network device;
a processing module, configured to determine a fourth network element according to the first message and/or the first request, wherein the fourth network element is configured to provide a user plane function; and
a sending module, configured to send fourth information to the access network device via a third network element, wherein the fourth information includes identification information of the user plane path and/or core network tunnel information of the fourth network element, and the core network tunnel information of the fourth network element indicates the fourth network element.

In combination with some embodiments of the eighth aspect, in some embodiments, the second network element is further configured to:
determine a user plane path identifier (ID) corresponding to the user plane path; and
create a context, wherein the context is configured to store related information of the user plane path, and the user plane path is associated with at least one of a data network name (DNN) of a first service, single network slice selection assistance information (S-NSSAI) of a first service, or the access network device.

In combination with some embodiments of the eighth aspect, in some embodiments, the context includes:
a context related to the user plane path; or
a PDU session context corresponding to the user plane path.

In combination with some embodiments of the eighth aspect, in some embodiments, the first request includes at least one of:
identification information of the user plane path;
information of the access network device;
service area information, wherein the service area information indicates a target area of a first service;
service location information, wherein the service location information indicates a target location of a first service; or
user plane information of the first network element.

In combination with some embodiments of the eighth aspect, in some embodiments, the fourth information further includes at least one of:
information of the access network device;
service area information, wherein the service area information indicates a target area of a first service;
service location information, wherein the service location information indicates a target location of a first service;
user plane information of the first network element;
a requested quality of service (QoS) flow; or
related QoS parameters of a requested QoS flow.

In combination with some embodiments of the eighth aspect, in some embodiments, after determining the fourth network element, the second network element is further configured to:
establish an N4 session with the fourth network element.

In combination with some embodiments of the eighth aspect, in some embodiments, before sending the fourth information to the access network device via the third network element, the second network element is further configured to:
determine the third network element according to the first message and/or the first request.

In combination with some embodiments of the eighth aspect, in some embodiments, the second network element is further configured to:
receive fifth information sent by the third network element, wherein the fifth information includes identification information of the user plane path and/or access network tunnel information of the access network device, and the access network tunnel information indicates user plane path information of the access network device; and
send a third message to the fourth network element, wherein the third message is configured to provide the access network tunnel information and/or the identification information of the user plane path to the fourth network element, for establishing the user plane path with the access network device.

In combination with some embodiments of the eighth aspect, in some embodiments, before receiving the fifth information sent by the third network element, the second network element is further configured to:
subscribe to the fifth information by the second network element from the third network element.

In combination with some embodiments of the eighth aspect, in some embodiments, the fifth information further includes first capability information, wherein the first capability information indicates whether a service data packet generated by the access network device includes a destination address of the service data packet packaged using user plane information of the first network element.

In combination with some embodiments of the eighth aspect, in some embodiments, the third message further includes a forwarding rule, wherein the forwarding rule indicates a rule for the fourth network element to forward the service data packet, and the forwarding rule is determined based on the first capability information.

In combination with some embodiments of the eighth aspect, in some embodiments, the forwarding rule includes at least one of:
a first rule, wherein the first rule indicates to forward a service data packet associated with a QoS flow identifier (QFI); or
a second rule, wherein the second rule indicates to forward a service data packet according to a destination address of the service data packet.

In combination with some embodiments of the eighth aspect, in some embodiments, before sending the third message to the fourth network element, the second network element is further configured to:
determine that the forwarding rule is the first rule in a case where the first capability information indicates that the service data packet generated by the access network device does not include the destination address of the service data packet packaged using the user plane information of the first network element;
determine that the forwarding rule is the second rule in a case where the first capability information indicates that the service data packet generated by the access network device includes the destination address of the service data packet packaged using the user plane information of the first network element.

In combination with some embodiments of the eighth aspect, in some embodiments, the second network element is further configured to:
send a first response to the first network element, wherein the first response includes at least one of:
second indication information, wherein the second indication information indicates that the user plane path between the first network element and the access network device is accepted;
information of the access network device;
identification information of the user plane path; or
address information of a user plane path of the access network device.

In combination with some embodiments of the eighth aspect, in some embodiments, the second network element is further configured to:
send a second response to the third network element, wherein the second response includes at least one of:
second indication information, wherein the second indication information indicates that the user plane path between the first network element and the access network device is accepted;
information of the access network device;
identification information of the user plane path; or
address information of a user plane path of the access network device.

In a ninth aspect, embodiments of the present disclosure provide a third network element, including:
a receiving module, configured to receive third information sent by a first network element, and send the third information to an access network device, wherein the third information comprises at least one of second information, user plane information of the first network element, or identification information of a user plane path, wherein the second information is configured to request data associated with a first service, and the third information is configured to request the access network device to transmit data requested by the second information via the user plane path; and
a sending module, configured to send a fourth message to an access network device, wherein the fourth message comprises at least one of user plane information of a first network element, second information, or identification information of a user plane path, and the fourth message is configured to request the access network device to transmit data requested by the second information via the user plane path.

In combination with some embodiments of the ninth aspect, in some embodiments, the third network element is further configured to:
receive, by the third network element, fourth information sent by a second network element, wherein the fourth information includes identification information of the user plane path and/or core network tunnel information of the fourth network element, the core network tunnel information of the fourth network element indicates the fourth network element, and the fourth information is configured to establish the user plane path between the first network element and the access network device; and
send, by the third network element, the fourth information to the access network device.

In combination with some embodiments of the ninth aspect, in some embodiments, the fourth information further includes at least one of:
information of the access network device;
service area information, wherein the service area information indicates a target area of a first service;
service location information, wherein the service location information indicates a target location of a first service;
user plane information of the first network element;
a requested QoS flow; or
related QoS parameters of a requested QoS flow.

In combination with some embodiments of the ninth aspect, in some embodiments, the third network element is further configured to:
receive fifth information sent by the access network device, wherein the fifth information includes identification information of the user plane path and/or access network tunnel information of the access network device, the access network tunnel information indicates user plane path information of the access network device, and the fifth information is configured to establish the user plane path between the first network element and the access network device; and
send the fifth information to the third network element.

In combination with some embodiments of the ninth aspect, in some embodiments, before receiving by the third network element, the fourth information sent by the second network element, the third network element is further configured to:
receive a second message sent by the first network element, wherein the second message is configured to request establishment of the user plane path between the first network element and the access network device; and
send a first request to the second network element, wherein the first request is configured to indicate to establish the user plane path between the first network element and the access network device.

In combination with some embodiments of the ninth aspect, in some embodiments, the third network element is further configured to:
receive a second response sent by the second network element, wherein the second response includes at least one of:
second indication information, wherein the second indication information indicates that the user plane path between the first network element and the access network device is accepted;
information of the access network device;
identification information of the user plane path; or
address information of the user plane path.

In combination with some embodiments of the ninth aspect, in some embodiments, the third network element is further configured to:
send a first response to the first network element, wherein the first response includes at least one of:
second indication information, wherein the second indication information indicates that the user plane path between the first network element and the access network device is accepted;
information of the access network device;
identification information of the user plane path; or
address information of the user plane path.

In a tenth aspect, embodiments of the present disclosure provide an access network device, including:
a receiving module, configured to receive third information sent by a first network element and/or a fourth message sent by a third network element, wherein the third information includes at least one of second information, user plane information of the first network element, or identification information of a user plane path, the fourth message comprises at least one of user plane information of the first network element, second information or identification information of a user plane path, wherein the second information is configured to request data associated with a first service, and the third information and the fourth message are configured to request the access network device to transmit data requested by the second information via a user plane path;
a processing module, configured to determine service data of the first service, and package the service data of the first service into a service data packet;
a sending module, configured to send the service data packet to the first network element via the user plane path.

In combination with some embodiments of the tenth aspect, the fifth information further includes first capability information, and the first capability information is configured to indicate whether the service data packet generated by the access network device includes a destination address of the service data packet packaged using the user plane information of the first network element.

In combination with some embodiments of the tenth aspect, in some embodiments, the access network device is further configured to:
receive, by the access network device, fourth information sent by a third network element, wherein the fourth information includes identification information of a user plane path and/or core network tunnel information of a fourth network element, the core network tunnel information of the fourth network element indicates the fourth network element, and the fourth information is configured to establish the user plane path between the first network element and the access network device;
send fifth information to the third network element, wherein the fifth information includes the identification information of the user plane path and/or access network tunnel information of the access network device, wherein the access network tunnel information indicates user plane path information of the access network device, and the fifth information is configured to establish the user plane path between the first network element and the access network device.

In combination with some embodiments of the fourth aspect, in some embodiments, the service data packet includes a destination address of the service data packet packaged using the user plane information of the first network element, or the service data packet does not include a destination address of the service data packet packaged using the user plane information of the first network element;
send the service data packet to the first network element via the user plane path.

In combination with some embodiments of the tenth aspect, in some embodiments, the access network device is further configured to:

receive the third information sent by the first network element via the user plane path and/or a control plane path.

In combination with some embodiments of the tenth aspect, in some embodiments, the access network device is further configured to:
receive the third information sent by the first network element via the third network element.

In an eleventh aspect, embodiments of the present disclosure provide a communication device. The communication device includes: one or more processors; one or more memories configured to store instructions, wherein the processor is configured to call instructions to cause the communication device to implement the path establishment method described in the first aspect, optional implementations of the first aspect, the second aspect, optional implementations of the second aspect, the third aspect, optional implementations of the third aspect, the fourth aspect, or optional implementations of the fourth aspect.

In a twelfth aspect, embodiments of the present disclosure provide a communication system. The communication system includes a first network element, a second network element, a third network element, and an access network device, wherein the first network element is configured to implement the path establishment method described in the first aspect and optional implementations of the first aspect, the second network element is configured to implement the path establishment method described in the second aspect and optional implementations of the second aspect, the third network element is configured to implement the path establishment method described in the third aspect and optional implementations of the third aspect, and the access network device is configured to implement the path establishment method described in the fourth aspect and optional implementations of the fourth aspect.

In a thirteenth aspect, embodiments of the present disclosure provide a storage medium. The storage medium stores instructions. When the instructions are run on a communication device, the communication device is caused to implement the path establishment method described in the first aspect, optional implementations of the first aspect, the second aspect, optional implementations of the second aspect, the third aspect, optional implementations of the third aspect, the fourth aspect, or optional implementations of the fourth aspect.

In a fourteenth aspect, embodiments of the present disclosure provide a program product. When the program product is executed by a communication device, the communication device is caused to implement the path establishment method described in the first aspect, optional implementations of the first aspect, the second aspect, optional implementations of the second aspect, the third aspect, optional implementations of the third aspect, the fourth aspect, or optional implementations of the fourth aspect.

In a fifteenth aspect, embodiments of the present disclosure provide a computer program. When the computer program is running, a computer is caused to implement the path establishment method described in the first aspect, optional implementations of the first aspect, the second aspect, optional implementations of the second aspect, the third aspect, optional implementations of the third aspect, the fourth aspect, or optional implementations of the fourth aspect.

It may be understood that the terminal, the network device, the communication device, the communication system, the storage medium, the program product, and the computer program are all used to implement the method in embodiments of the disclosure. Thus, regarding beneficial effects they may achieve, reference may be made to the beneficial effects in the corresponding methods, which will not be repeated herein.

Embodiments of the disclosure provide names. In some embodiments, terms such as "path establishment method", "information processing method", "information sending method" and "information receiving method" may be used interchangeably, terms such as "communication device", "information processing device", "information sending apparatus", and "information receiving apparatus" may be used interchangeably, and terms such as "information processing system", "communication system", "information sending system" and "information receiving system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined: in addition, respective embodiments may be arbitrarily combined, for example, some or all steps of different embodiments may be arbitrarily combined, and a certain embodiment may be arbitrarily combined with the optional implementations of other embodiments.

In various embodiments of the disclosure, unless otherwise specified or there is a logical conflict, the terms and/or descriptions between embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In embodiments of the disclosure, "a plurality of" refers to two or more.

In some embodiments, the terms "at least one of", "one or more", "a plurality of", "multiple" etc. may be used interchangeably.

In embodiments of the disclosure, descriptions such as "at least one of A, B, C..." and "A and/or B and/or C..." include the case where any one of A, B, C... exists alone, and also include the case of any combination of any plurality of items in A, B, C..., and each case may exist independently. For example, "at least one of A, B, and C" includes the case of A alone, B alone, C alone, the combination of A and B, the combination of A and C, the combination of B and C, and the combination of A, B, and C. For example, "A and/or B" includes the case of A alone, B alone, and the combination of A and B.

In some embodiments, expressions such as "in one case A, in another case B" and "in response to one case A, in response to another case B" may, depending on the context, include the following technical solutions: executing A regardless of B, that is, in some embodiments, A; executing B regardless of A, that is, in some embodiments, B; selectively executing A or B, that is, in some embodiments, one is selected from A and B to be executed, executing both A and B, that is, in some embodiments, both A and B are executed. The same applies similarly when there are more branches such as A, B, C, etc.

The prefixes such as "first" and "second" in embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus, etc. may be interpreted as physical or virtual, and their names are not limited to the names recorded in embodiments. The terms such as "apparatus", "equipment", "device", "circuit", "network element", "node", "function", "unit", "section", "system", "network", "chip", "chip system", "entity", and "subject" may be used interchangeably.

In some embodiments, "network" can be interpreted as devices contained within the network (e.g., access network devices, core network devices, etc.)

In some embodiments, the terms such as "access network device (AN device)", "radio access network device (RAN device)", "base station (BS)", "radio base station", "fixed station". In some embodiments, they may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced by the terminal. For example, various embodiments of the disclosure may also be applied to a structure in which the communication between the access network device, the core network device, or the network device and the terminal is replaced by the communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced by the language corresponding to the communication between the terminals (for example, "side"). For example, the uplink channel, the downlink channel, etc. may be replaced by the side channel, and the uplink, the downlink, etc. may be replaced by the side link.

In some embodiments, the terminal may be replaced by the access network device, the core network device, or the network device. In this case, the access network device, the core network device, or the network device may also be configured to have a structure that has all or part of functions of the terminal.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

Correspondence relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

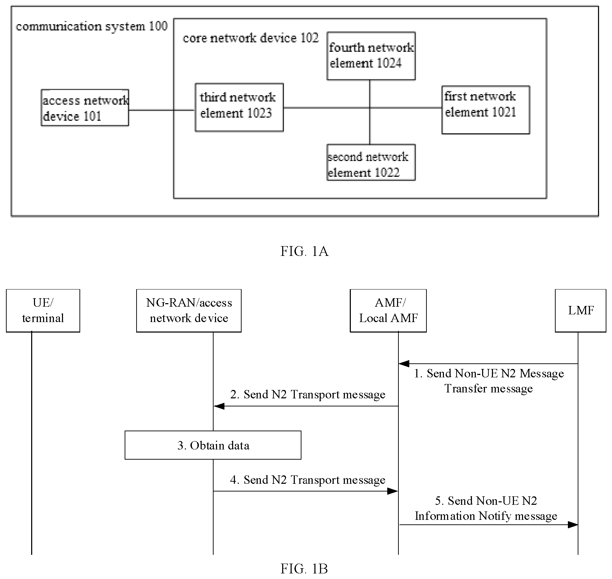

FIG. 1A is a schematic diagram illustrating an architecture of a communication system according to an embodiment of the disclosure. As shown in FIG. 1A, the communication system 100 may include at least one of an access network device 101 and a core network device 102.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the terminal includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

In some embodiments, the core network device 102 may include a first network element 1021, a second network element 1022, a third network element 1023, a fourth network element 1024, etc. The network element may be virtual or physical. The core network may include, for example, at least one of an evolved packet core (EPC), a 5G core network (5GCN), or a next generation core (NGC). It should be noted that the number of the core network device 102 may be one or more.

In some embodiments, the first network element 1021 is configured to provide positioning services, such as a Location Management Function (LMF), and the name is not limited to this. Optionally, the first network element may also be a network element within the core network that provides other services. For example, the first network element may be a Sensing Function (SF) element that provides sensing services, or another network element that provides new services in the core network.

In some embodiments, the second network element 1022 is configured to provide a session management function. For example, the second network element 1022 is a Session Management Function (SMF).

In some embodiments, the third network element 1023 is configured to provide an access and mobility management function, such as Access and Mobility Management Function (AMF).

In some embodiments, the fourth network element 1024 is configured to provide a user plane function. For example, the fourth network element 1024 is a User Plane Function (UPF).

It may be understood that the communication system described in embodiments of the disclosure aims to more clearly illustrate the technical solution of embodiments of the disclosure, and does not constitute a limitation on the technical solution proposed in embodiments of the disclosure. A person skilled in the art may know that with the evolution of the system architecture and the emergence of new service scenarios, the technical solution proposed in embodiments of the disclosure are also applicable to similar technical problems.

The following embodiments of the disclosure may be applied to the communication system 100 or part of the subjects shown in FIG. 1A, but are not limited herein. The subjects shown in FIG. 1A are examples, and the communication system may include all or part of the subjects in FIG. 1A, or may include other subjects other than those shown in FIG. 1A. The number and form of the subjects are arbitrary. The connection relationships between the subjects are examples. The subjects may be connected or disconnected, and the connection may be in any manner, which may be a direct connection or an indirect connection, or may be a wired connection or a wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may be applied.

In some technical solutions, FIG. 1B is a flowchart of a method for "a core network element obtaining service data from an access network device" provided in the related art. As shown in FIG. 1B, the method may include the following steps:
1. The LMF sends a non-UE N2 message transfer message (invoking the Namf_Communication_NonUeN2MessageTransfer service) to the AMF network element to request service data (e.g., requesting network assistance data).
2. The AMF network element sends an N2 Transport message to the access network device to forward the service data received from the LMF to the access network device.
3. The access network device obtains data.
4. The access network device sends an N2 transport message to the AMF network element, which carries the service data requested by the LMF network element.
5. The AMF network element sends a non-UE N2 message notification message (invoking the Namf_Communication_NonUeN2InfoNotify service) to the LMF network element, which carries the service data requested by the LMF network element.

As shown in FIG. 1B, the LMF network element currently retrieves service data from the access network device via the AMF network element, meaning that the core network element obtains service data from the access network device via the control plane path. When the core network element needs to retrieve a large amount of data from the access network device, transmitting the data via the control plane would result in lower transmission efficiency. Therefore, the method of "the core network element obtaining data from the access network device via the user plane (UP)" is considered.

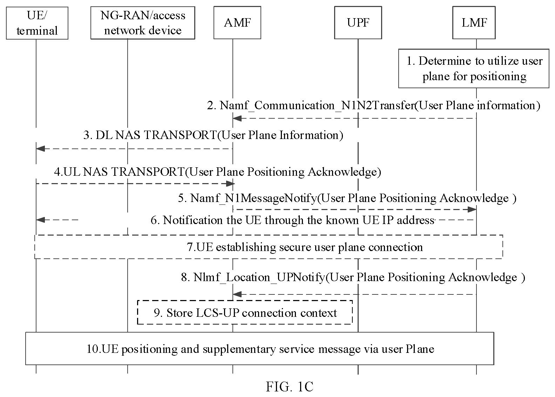

However, current user plane connections are established between the terminal and LMF to achieve terminal positioning. Alternatively, FIG. 1C shows a flowchart of a method for "establishing a user plane connection between the terminal and LMF to achieve positioning" provide in the related art. As shown in FIG.1C, this method may include the following steps:
1. LMF determines to use the user plane for positioning.
2. LMF sends user plane information of LMF to AMF through an N1N2 transmission message (invoking Namf_Communication_N1N2Transfer service). The user plane information may be the ID and/or Internet Protocol (IP) address of the LMF, for example.
3. AMF sends a downlink non-access stratum (DL NAS) transport message to the terminal, which includes the user plane information of the LMF. The above-mentioned terminal may also be referred to as User Equipment (UE).
4. The terminal sends an uplink non-access stratum (UL NAS) transport message to the AMF, which includes a User Plane Positioning Acknowledgment. The User Plane Positioning Acknowledgement may include the IP address of the terminal.
5. AMF sends the user plane positioning acknowledgement to LMF through an N1 information notification message (invoking Namf_N1MessageNotify service).
6. AMF notifies the terminal to establish a user plane connection based on the IP address of the terminal.
7. The terminal establishes a user plane connection with the LMF.
8. LMF sends a positioning user plane notification to AMF (invoking the Nlmf_Location-UPNotify service), which includes the user plane positioning acknowledgement.
9. AMF stores Location Service (LCS) user plane connection context.
10. The terminal positioning and supplementary service messages are performed between the terminal and LMF via the user plane.

From FIG. 1C, it can be seen that the current user plane connection is established between the terminal and the LMF, and there is no method to establish a user plane connection between the access network device and the core network element (such as LMF), which makes the current method unable to achieve the purpose of "the access network device providing data to the core network element via the user plane path".

It should be noted that in a service-oriented architecture, sending messages between network elements can be achieved, for example, by invoking corresponding services. The response of the message may be, for example, the output after invoking and executing the corresponding service, and the same rule will be applied in the subsequent implementation description.

One end of the user plane path described in embodiments of the present disclosure is an access network device. For example, a user plane path can include two ends, one of which is connected to an access network device. The access network device is the device connected to one end of the user plane path, or it can be understood that the user plane path terminates at the access network device, or it can be understood that the user plane path is a special user plane path unrelated to the terminal. The user plane connection based on this user plane path is different from the current user plane connection originating from the terminal. The data of the user plane connection based on this user plane path terminates at the access network device, such as service data packets packaged and sent by the access network device or service data packets received and parsed by the access network The user plane path is used to connect the access network device and a data network via the user plane path, where the data network is the data network to which the first service server belongs. The data network may be an exclusive data network of the first service server or a data network shared with other service servers.

When the user plane path does not exist, a new user plane path needs to be established. When the user plane path exists, the existing user plane path can be directly used or modified, and then data can be provided from the access network device to the core network element via the relevant user plane path.

The user plane path in embodiments of the present disclosure may refer to: the access network device is connected to the data network (DN) to which the first network element belongs via the fourth network element (access network device-fourth network element-DN). The user plane connection may be: the access network device is connected to the first network element via the fourth network element (access network device-fourth network element-first network element), where the user plane path can be understood as including the concept of user plane connection. On the basis of establishing the user plane path, the user plane connection is established between the two end devices (the access network device and the first network element) for user plane data transmission. Based on specific implementation, user plane connection establishment may also have explicit connection establishment processing for packet packaging and transmission, or it may simply package and send packets based on the address information of the other end, or directly package and send packets according to the data flow (such as QoS flow).

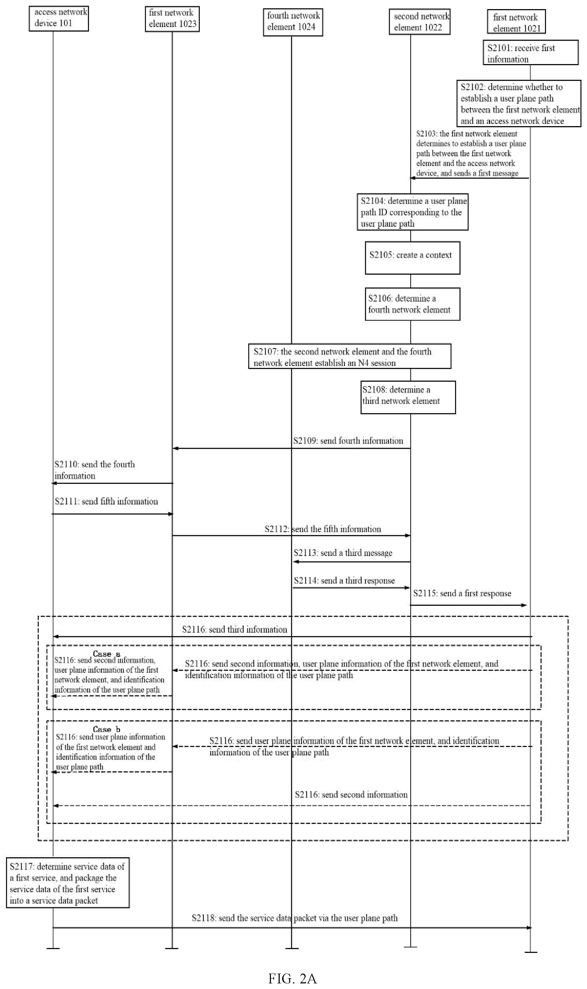

FIG. 2A is a schematic diagram of interaction in a path establishment method according to an embodiment of the present disclosure. As shown in FIG. 2A, this embodiment of the present disclosure relates to a path establishment method, applied in a communication system 100. The method includes the following steps.

At step 2101, a first network element receives first information.

Optionally, the first network element may be configured to provide positioning services, such as a Location Management Function (LMF), and the name is not limited to this. Optionally, the first network element may also be a network element within the core network that provides other services. For example, the first network element may be a Sensing Function (SF) that provides sensing services, or another network element that provides new services in the core networks.

Optionally, in some embodiments, the first information may be related to the first service, for example, the first information may be configured to request service data related to the first service. Optionally, the first service may include at least one service. For example, the first service may include a sensing service and/or a positioning service. Alternatively, the first service may also include one or more services other than the sensing service and positioning service. Optionally, the first information may be a service request for the first service (such as a positioning service request), but is not limited to this.

Optionally, the first information may include at least one of:
information of an access network device;
service area information, where the service area information is configured to indicate a target area of the first service;
service location information, where the service location information is configured to indicate a target location of the first service;
a requested service data type of the first service; or
requested quality of service (QoS) information of service data of the first service.

Optionally, the information of the access network devices mentioned above can be configured to indicate the target access network device for the first service. The target access network device can be understood as, for example, an access network device configured to provide service data for the first service. By indicating the target access network device, the first network element can determine which access network device to establish a user plane path with, which facilitates the successful establishment of a user plane path between the first network element and the target access network device in the future, so that the first network element can efficiently obtain the service data of the first service from the target access network device based on the user plane path, and improve the transmission efficiency of data.

Optionally, the information of the access network device may include at least one of the following: the identifier of the access network device, the IP address of the access network device, the Single Network Slice Selection Assistance Information (S-NSSAI) supported by the access network device, the Cell Identifier (CI) list supported by the access network device, and the Tracking Area Identifier (TAI) list supported by the access network device.

Optionally, the target area of the first service mentioned above may refer to the geographical area where the first service operates. For example, when the first service is a sensing service, the target area of the first service may be the location area that the sensing service needs to sense, such as the TAI list and/or CI list or geographic location range that needs to be sensed. Alternatively, when the first service is a positioning service, the target area of the first service may be the location area where the device to be positioned is located, such as the TAI list and/or CI list or geographic location range of the device to be positioned.

Optionally, the target location of the first service mentioned above may refer to the actual location where the first service operates. For example, when the first service is a sensing service, the target location of the first service may be the location information that the sensing service needs to sense. When the first service is a positioning service, the target location of the first service may be the location information of the device to be positioned.

Optionally, in some embodiments, when the first information does not include the information of the access network device, the first network element cannot know which device the target access network device of the first service is. At this time, the first network element can select the target access network device based on the service area information and/or service location information. For example, the first network element can determine the access network device closest to the area indicated by the service area information and/or the location indicated by the service location information as the target access network device, so that a user plane path can be established between the first network element and the target access network device in the future, and the first network element can efficiently obtain the service data of the first service from the target access network device based on the user plane path.

Optionally, in some embodiments, the first information may be sent to the first network element by at least one of a terminal, an Application Function (AF), or a 5G Core Network Function (5GC NF).

At step 2102, the first network element determines whether to establish a user plane path between the first network element and the access network device.

Optionally, the first network element may determine whether to establish a user plane path between the first network element and the access network device based on at least one of first information, a capability of the access network device, a network congestion state, or a capability of the core network. Optionally, the above network congestion state may include a control plane network congestion state and/or a user plane network congestion state.

Optionally, in some embodiments, when at least one of the first information, the capability of the access network device, the network congestion state, or the capability of the core network meets a first preset condition, the first network element determines to establish a user plane path between the first network element and the access network device.

Optionally, the first preset condition may include at least one of the following:
a service data volume of the first service requested by the first information is greater than a first threshold;
a service data type of the first service requested by the first information is a specified type that requires user plane transmission;
a QoS requirement for the service data of the first service requested by the first information is a specified type that requires user plane transmission;
the access network device supports establishing a user plane path with the core network;
the core network supports establishing a user plane path with the access network device;
the user plane network congestion state is that a user plane network congestion level is less than a second threshold;
the control plane network congestion state is that a control plane network congestion level is greater than a third threshold.

It should be understood that the first preset condition mentioned above is only an exemplary introduction, and this disclosure is not limited to it. The first preset condition may also include other conditions.

At step 2103, the first network element determines to establish a user plane path between the first network element and the access network device, and the first network element sends a first message to a second network element.

In some embodiments, the second network element may be configured to provide a session management function. For example, the second network element is a Session Management Function (SMF).

Optionally, the first message may be configured to request establishment of a user plane path between the first network element and the access network device. Optionally, the first message may be, for example, a user plane establishment request, a user plane connection create request, etc., but is not limited to these.

Optionally, the first message may include at least one of:
first indication information, which may be configured to indicate the establishment of a user plane path between the first network element and the access network device;
information of the access network device;
service area information;
service location information;
user plane information of the first network element; or
identification information of the user plane path.

Optionally, for a detailed introduction regarding "information of the access network device, service area information, and service location information", reference can be made to the above embodiment description.

Optionally, the user plane information of the first network element may be configured to indicate the first network element, so that the second network element and the access network device know which specific first network element needs to establish a user plane path with the access network device. Optionally, the user plane information of the first network element may include at least one of the network element identity (ID) of the first network element, or the IP address of the first network element.

Optionally, the identification information of the user plane path may be configured to identify the user plane path between the first network element and the access network device, so that the second network element can manage the user plane path based on the identification information of the user plane path. For example, the second network element can create a context associated with the user plane path based on the identification information of the user plane path, and store the relevant information of the user plane path (such as the data network name (DNN) of the first service associated with the user plane path, the S-NSSAI of the first service, the access network device, the information of the fourth network element, the core network tunnel information of the fourth network element, and the access network tunnel information ((R)AN tunnel information) of the access network device, etc.) in this context. Optionally, the identification information of the user plane path may include: the Protocol Data Unit (PDU) session ID corresponding to the user plane path: or the user plane path ID corresponding to the user plane path.

At step 2104, the second network element determines the user plane path ID corresponding to the user plane path.

Optionally, in some embodiments, the second network element may receive the user plane path ID sent by the first network element via the first message, or the second network element may autonomously allocate a user plane path ID for the user plane path.

At step 2105, the second network element creates a context.

Optionally, this context can be configured to store relevant information of the user plane path. Optionally, the user plane path can be associated with at least one of the Data Network Name (DNN) of the first service, the S-NSSAI of the first service, or the access network device.

Optionally, in some embodiments, the context may include: user plane path related context; or the PDU session context corresponding to the user plane path.

At step 2106, the second network element determines a fourth network element.

In some embodiments, the fourth network element is configured to provide a user plane function. For example, the fourth network element is a User Plane Function (UPF). Optionally, the fourth network element can implement a user plane path between the first network element and the access network device. Specifically, the access network device can send the service data packet to the fourth network element, and then the fourth network element forwards the service data packet to the first network element, thereby achieving data transmission between the access network device and the first network element via the user plane path.

Optionally, the second network element can determine the fourth network element based on the first message. The method for determining the fourth network element based on the first message by the second network element may include the following. The second network element first determines the location of the target access network device and/or the location of the first network element based on the first message. For example, the location of the target access network device can be determined based on the information of the access network device, service area information, service location information, etc. in the first message, and the location of the first network element can be determined based on the user plane information of the first network element in the first message (for example, after determining the specific corresponding first network element based on the user plane information of the first network element, the specific location of the first network element can be known). Afterwards, the second network element can determine the fourth network element based on the location of the target access network device and/or the location of the first network element, for example, making the determined fourth network element closer to the target access network device and/or the first network element.

At step 2107, the second network element and the fourth network element establish an N4 session.

Optionally, the second network element establishes an N4 session with the fourth network element, allowing interaction between the second and fourth network elements through the N4 session. Since the first network element and the access network device need to establish a user plane path through the fourth network element, the second network element can subsequently exchange information with the fourth network element through the N4 session to successfully establish a user plane path between the first network element and the access network device.

At step 2108, the second network element determines a third network element.

In some embodiments, the third network element is configured to provide an access and mobility management function. For example, the third network element is an Access and Mobility Management Function (AMF).

Optionally, the second network element may determine the third network element based on the first message, and the method for determining the third network element based on the first message by the second network element may include: the second network element first determines the location of the target access network device and/or the location of the first network element based on the first message, and then determines the third network element based on the location of the target access network device and/or the location of the first network element, for example, the determined third network element may be a network element close to the target access network device and/or the first network element, where the location of the target access network device and/or the location of the first network element may be a cell identifier (CI) list corresponding to or supported by the target access network device and/or the first network element, a Tracking Area Identifier (TAI) list supported by the access network device.

At step 2109, the second network element sends fourth information to the third network element.

Optionally, the fourth information may include identification information of the user plane path and/or core network tunnel information of the fourth network element. The core network tunnel information of the fourth network element indicates the fourth network element.

Optionally, the second network element can send the fourth message to the third network element via the fifth message, which may be, for example, the Namf_Communication-NonUeN2Message Transfer message or the Namf_Communication_nN1N2 message transfer, but is not limited to these.

Optionally, the fourth information may further include at least one of:
information of the access network device;
service area information, wherein the service area information is configured to indicate a target area of the first service;
service location information, wherein the service location information is configured to indicate a target location of the first service;
user plane information of the first network element;
QoS flow requested; or
relevant QoS parameters of the requested QoS flow.

At step 2110, the third network element sends the fourth information to the access network device.

Optionally, the third network element sends the fourth information to the access network device, so that the access network device knows the identification information of the user plane path and/or the fourth network element based on the fourth information. As mentioned above, the fourth network element is configured to implement the user plane path between the access network device and the first network element. Therefore, when the access network device knows which network element is the fourth network element, it is equivalent to knowing which fourth network element it needs to use to establish the user plane path between the access network device and the first network element, thereby ensuring the successful establishment of the user plane path between the access network device and the first network element. At the same time, when the access network device knows the identification information of the user plane path, the access network device can subsequently manage the transmission on the user plane path based on the identification information of the user plane path. For example, when the access network device needs to send a service data packet to the first network element via the user plane path, the identification information of the user plane path can be included in the service data packet to indicate that the service data packet is sent to the first network element connected to the user plane path.

Optionally, the third network element can send the fourth information to the access network device via a sixth message, which may be, for example, an N2 Transport Request message or an N2 PDU Session Request message, but is not limited to these.

At step 2111, the access network device sends fifth information to the third network element.

Optionally, in some embodiments, the fifth information may include identification information of the user plane path and/or access network ((R)AN) tunnel information of the access network device. The access network tunnel information is configured to indicate the user plane path information of the access network device, for example, the access network tunnel information can indicate the access network device. Optionally, the access network device provides the access network tunnel information, so that other network elements (such as the second network element, the fourth network element, etc.) know which specific access network device the first network element wants to establish a user plane connection with, in order to successfully establish a user plane connection between the first network element and the access network device in the future.

Optionally, the fifth information may also include first capability information, which may be configured to indicate whether the service data packet generated by the access network device includes the destination address of the service data packet packaged using the user plane information of the first network element.

Optionally, the access network device can send the fifth information to the third network element through a seventh message, which may be, for example, an N2 Transport Response message or an N2 PDU Session Response message, but is not limited to these.

At step 2112, the third network element sends the fifth information to the second network element.

Optionally, the third network element can send the fifth information to the second network element through an eighth message, which may be, for example, the Namf_Communication_NonUeN2InfoNotify message, or the Nsmf_CDUSession_UpdateSMContext Request service, but is not limited to these.

It should be noted that in some embodiments, the prerequisite for executing step 2112 is that the second network element subscribes to the fifth information from the third network element. Optionally, in some embodiments, when the second network element performs the above step 2109, it can be assumed that the second network element has subscribed to the fifth information from the third network element, or the second network element can indicate to the third network element that the second network element needs to subscribe to the fifth information. Optionally, the subscription operation can be completed simultaneously with the second network element sending the fourth information to the third network element, or before or after the second network element sends the fourth information to the third network element. Optionally, the second network element can subscribe to the fifth information from at least one candidate third network element connected to the access network device, so that the first network element can obtain the fifth information in a timely manner.

At step 2113, the second network element sends a third message to the fourth network element.

Optionally, the third message can be configured to provide the access network tunnel information and/or the identification information of the user plane path to the fourth network element for establishing the user plane path with the access network device.

Optionally, the third message may also include a forwarding rule. Optionally, the forwarding rule can be configured to indicate the rule for the fourth network element to forward the service data packet, that is, the forwarding rule for the fourth network element to forward the service data packet generated and sent by the access network device to the first network element. Optionally, the forwarding rule can be determined based on the first capability information. Optionally, the forwarding rule may include a first rule and/or a second rule, wherein the first rule indicates forwarding the service data packet associated with the QoS Flow Identifier (QFI), and the second rule indicates forwarding the service data packet based on the destination address of the service data packet. When the first capability information indicates that the service data packet generated by the access network device does not include the destination address of the service data packet packaged using the user plane information of the first network element, the second network element determines the forwarding rule as the first rule, when the first capability information indicates that the service data packet generated by the access network device includes the destination address of the service data packet packaged using the user plane information of the first network element, the second network element determines the forwarding rule as the second rule.

The following provides a detailed introduction to the principle relationship between the first capability information and the forwarding rule.

Optionally, when a user plane path is established between the access network device and the first network element, the access network device provides service data to the first network element via the user plane path, which is forwarded through the fourth network element. Specifically, the access network device generates the service data packet and sends the service data packet to the fourth network element, and the fourth network element forwards the service data packet to the first network element. The fourth network element usually needs to determine which first network element the destination address of the service data packet is when forwarding the service data packet sent by the access network device. However, the service data packet is generated and packaged by the access network device, and whether the destination address is included in the service data packet is determined by the packaging capability of the access network device. Based on this, in some embodiments, the access network device can send the first capability information to the second network element via the third network element. The first capability information is configured to indicate the packaging capability of the access network device, that is, whether the service data packet generated by the access network device includes the destination address of the service data packet packaged using the user plane information of the first network element, and the second network element can determine the forwarding rule of the fourth network element based on the first capability information. Specifically, When the first capability information indicates that the service data packet generated by the access network device does not include the destination address of the service data packet packaged using the user plane information of the first network element, the forwarding rule is determined as the first rule, which is to forward the service data packet associated with QFI (i.e., without a destination address, directly forward the service data packet associated with QFI to the first network element associated with QFI); when the first capability information indicates that the service data packet generated by the access network device includes the destination address of the service data packet packaged using the user plane information of the first network element, the forwarding rule is determined as the second rule, which is to forward the service data packet according to the destination address of the service data packet. Afterwards, the second network element sends the forwarding rule to the fourth network element, so that the fourth network element can successfully forward the service data packet via the user plane path based on the forwarding rule, ensuring the stability and accuracy of the data transmission via the user plane path.

Optionally, in some embodiments, the third message may be the N4 Session Modification Request.

At step 2114, the fourth network element sends a third response to the second network element.

Optionally, the third response may be the N4 Session Modification Response.

At step 2115, the second network element sends a first response to the first network element.

Optionally, in some embodiments, the first response may include at least one of:
second indication information, which is configured to indicate that the user plane path between the first network element and the access network device is accepted;
information of the access network device;
identification information of the user plane path; or
address information of the user plane path of the access network device.

Optionally, the address information of the user plane path of the access network device may be, for example, the IP address of the port connected to the user plane path in the access network device.

Optionally, the first response may be, for example, UPConnection_Create Response.

At step 2116, the first network element sends third information to the access network device.

Optionally, in some embodiments, the third information may include at least one of second information, user plane information of the first network element, or identification information of the user plane path. Optionally, the second information can be configured to request service data related to the first service. For example, the second information may be a Network Positioning Message, but is not limited to this. Optionally, in some embodiments, the second information may have the same function as the first information and may be the same information, or the second information may be different from the first information, or the second information may be configured to request the access network device to collect service data that needs to serve the first information.

Optionally, in some embodiments, the first network element may send the third information to the access network device via the user plane path and/or a control plane path. The method for the first network element to send the third information to the access network device via the control plane path may include: the first network element sending the third information to the access network device via the third network element. Optionally, as shown in Case a of FIG. 2A, the method for the first network element to send the third information to the access network device via the control plane path may include: the first network element sending the second information the user plane information of the first network element, and the identification information of the user plane path in the third information to the third network element (for example, the first network element can send the second information, the user plane information of the first network element, and the identification information of the user plane path to the third network element via the Namf_Communication_NonUeN2MessageTransfer message), and then the third network element sending the second information, the user plane information of the first network element, and the identification information of the user plane path to the access network device (for example, the third network element can send the second information, the user plane information of the first network element, and the identification information of the user plane path to the access network device via the N2 Transport message).

Optionally, the first network element can also send the third information to the access network device via the user plane path and control plane path. Optionally, as shown in Case b of FIG. 2A, the method for the first network element to send the third information to the access network device via the user plane path and control plane path may include: the first network element sending the user plane information of the first network element and the identification information of the user plane path in the third information to the third network element (for example, the first network element can send the user plane information of the first network element and the identification information of the user plane path to the third network element via the Namf_Communication_NonUeN2MessageTransfer message), and then the third network element sending the user plane information of the first network element and the identification information of the user plane path to the access network device (for example, the third network element can send the user plane information of the first network element and the identification information of the user plane path via the N2 Transport message), and the first network element sending the second information in the third information to the access network device via the user plane path (for example, the first network element can send the second information to the access network device via the user plane connection). The difference between the user plane path and the user plane connection may be that the user plane path may refer to that the access network device is connected to the data network to which the first network element belongs via the fourth network element (access network device-fourth network element-DN); the user plane connection may refer to that the access network device is connected to the first network element via the fourth network element (access network device-fourth network element-first network element), where the user plane path can be understood as including the concept of user plane connection.

Optionally, the first network element may also send the third information to the access network device via the user plane path. Alternatively, the first network element can send the second information, the user plane information of the first network element, and the identification information of the user plane path in the third information to the access network device via the user plane path. For example, the first network element can send the second information, the user plane information of the first network element, and the identification information of the user plane path to the access network device via the user plane connection.

At step 2117, the access network device determines service data of the first service, and packages the service data of the first service into the service data packet.

Optionally, the access network device can collect the service data of the first service and package the service data of the first service into the service data packet based on the first capability information and/or whether the access network device knows the user plane information of the first network element. Optionally, when the access network device is not aware of the user plane information of the first network element and/or the first capability information indicates that the data packet generated by the access network device does not include the destination address of the first service data packet packaged using the user plane information of the first network element, then the service data packet generated by the access network device does not include the destination address of the service data packet packaged using the user plane information of the first network element. When the access network device obtains the user plane information of the first network element and the first capability information indicates that the data packet generated by the access network device includes the destination address of the first service data packet packaged using the user plane information of the first network element, then the service data packet generated by the access network device includes the destination address of the service data packet packaged using the user plane information of the first network element.

At step 2118, the access network device sends the service data packet to the first network element via the user plane path.

For example, the access network device can send the second information to the first network element via the user plane connection.

The path establishment method disclosed in embodiments of the present disclosure may include at least one of steps S2101 to S2118. For example, step S2101 can be implemented as an independent embodiment, step S2102 can be implemented as an independent embodiment, step S2103 can be implemented as an independent embodiment, and steps S2101+S2102 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or examples.

In some implementations, when a user plane path exists, the existing user plane path can be directly used. That is, in step S2103, the second network element determines that there is a suitable user plane path that can be provided to the first network element after receiving the message from step S2103. Therefore, the intermediate steps can be ignored and step S2115 can be executed. In this case, when step 2115 is executed, the first response sent by the second network element to the first network element can include relevant user plane path information (i.e., path information of the existing user plane path that can be directly used), and then data can be provided from the access network device to the core network element via the relevant user plane path in subsequent steps.

In some implementations, when a user plane path exists, the existing user plane path can be modified. That is, in step S2103, the second network element determines that there is a user plane path connected to the same data network that can be provided to the first network element for use after receiving the message in step S2103. If the user plane path needs to be modified, the necessary modification operation is performed, and the relevant user plane path information is sent to the first network element. Then, through subsequent steps, data is provided from the access network device to the core network element via the relevant user plane path. For example, when application servers for multiple services are deployed on the same data network, if the service request for service A has already triggered the user plane path connected to the data network, and the service request for service B requires the use of the user plane path, it is determined that the transmission of service data for service B can use the user plane path established by the service request for service A, but the user plane path established by the service request for service A needs to be modified to be associated with the service server for service B. The process of modifying the user plane path is similar to the process of establishing a user plane path, except that the establishment requests exchanged between various network elements become modification requests, which carry the same parameters. The second network element does not need to create a user plane path ID or create a user plane path context, but updates the user plane path context based on the modification. If a new fourth network element needs to be selected, the fourth network element will be added or migrated.

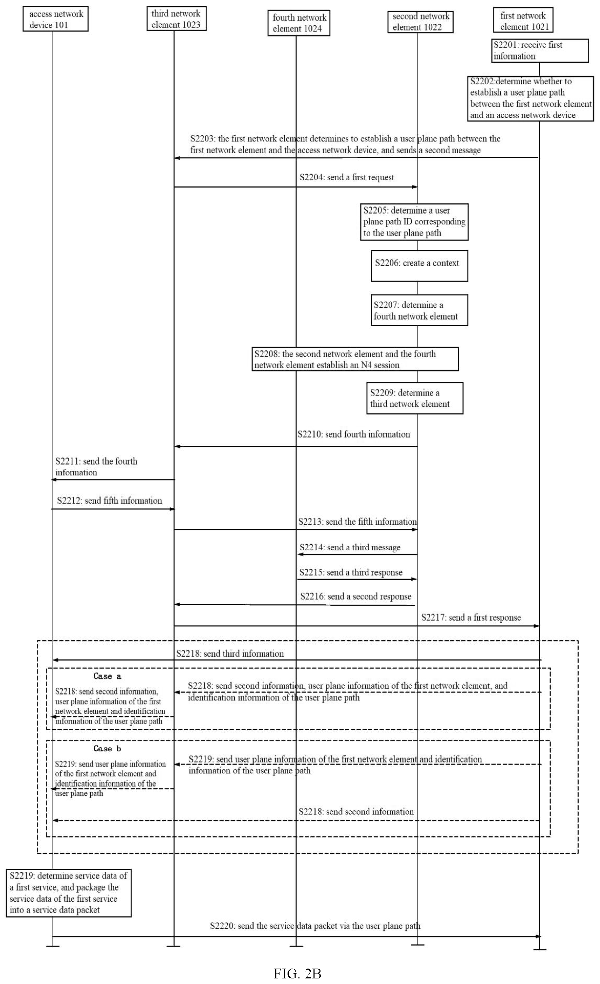

FIG. 2B is a schematic diagram of interaction in a path establishment method according to an embodiment of the present disclosure. As shown in FIG. 2B, this embodiment of the present disclosure relates to a path establishment method, applied in a communication system 100. The method includes the following steps.

At step 2201, a first network element receives first information.

At step 2202, the first network element determines whether to establish a user plane path between the first network element and an access network device.

At step 2203, the first network element determines to establish the user plane path between the first network element and the access network device, and the first network element sends a second message to a third network element.

Optionally, in some embodiments, the second message may include at least one of:
first indication information, wherein the first indication information indicates to establish a user plane path between the first network element and the access network device;
information of the access network device;
service area information;
service location information;
user plane information of the first network element;
second information, wherein the second information is configured to request data related to the first service; or
identification information of user plane path.

Optionally, the second message may be, for example, Namf_Communication_NonUeN2MessageTransfer, but is not limited to this.

At step 2204, the third network element sends a first request to a second network element.

Optionally, the first request is configured to indicate establishment of a user plane path between the first network element and the access network device. The first request includes at least one of:
identification information of the user plane path;
information of the access network device;
service area information, wherein the service area information is configured to indicate the target area of the first service;
service location information, wherein the service location information is configured to indicate the target location of the first service; or
user plane information of the first network element.

Optionally, the first request may be Nsmf_PDUSession_CreateSMContext Request, but is not limited to this.

At step 2205, the second network element determines a user plane path ID corresponding to the user plane path.

At step 2206, the second network element creates a context.

At step 2207, the second network element determines a fourth network element.

Optionally, the second network element can determine the fourth network element based on the first request. The method for determining the fourth network element based on the first request by the second network element may include the following. The second network element first determines the location of the target access network device and/or the location of the first network element based on the first request, for example, determine the location of the target access network device based on the information of the access network device, service area information, service location information, etc. in the first request, and determine the location of the first network element based on the user plane information of the first network element in the first request (for example, after determining the specific corresponding first network element based on the user plane information of the first network element, the specific location of the first network element can be known). Afterwards, the location of the fourth network element can be determined based on the location of the target access network device and/or the location of the first network element, for example, making the determined fourth network element close to the target access network device and/or the first network element.

At step 2208, the second network element and the fourth network element establish an N4 session.

At step 2209, the second network element determines the third network element.

Optionally, the second network element may determine the third network element based on the first request. The method for determining the third network element based on the first request by the second network element may include the following. The second network element first determines the location of the target access network device and/or the location of the first network element based on the first request, and then determines the third network element based on the location of the target access network device and/or the location of the first network element. For example, the determined third network element may be a network element close to the target access network device and/or the first network element.

At step 2210, the second network element sends fourth information to the third network element.

At step 2211, the third network element sends the fourth information to the access network device.

At step 2212, the access network device sends fifth information to the third network element.

At step 2213, the third network element sends the fifth information to the second network element.

At step 2214, the second network element sends a third message to the fourth network element.

At step 2215, the fourth network element sends a third response to the second network element.

At step 2216, the second network element sends a second response to the third network element.

Optionally, the second response may include at least one of:
second indication information, wherein the second indication information indicates that the user plane path between the first network element and the access network device is accepted;
information of the access network device;
identification information of the user plane path; or
address information of the user plane path.

Optionally, the second response may be, for example, Nsmf_PDUSession_CreateSMContext response, but is not limited to this.

At step 2217, the third network element sends a first response to the first network element.

At step 2218, the first network element sends third information to the access network device.

At step 2219, the access network device determines service data of a first service, and packages the service data of the first service into a service data packet.

At step 2220, the access network device sends the service data packet to the first network element via the user plane path.

For other detailed introductions about steps 2201-2220, please refer to the above embodiment description.

The path establishment method disclosed in embodiments of the present disclosure may include at least one of steps S2201 to S2220. For example, step S2201 can be implemented as an independent embodiment, step S2202 can be implemented as an independent embodiment, step S2203 can be implemented as an independent embodiment, and steps S2201+S2202 can be implemented as an independent embodiment, but not limited to these.

In this embodiment or example, each step can be independent, arbitrarily combined, or exchanged in order without contradiction, and optional implementations or examples can be arbitrarily combined, and can be arbitrarily combined with any steps of other embodiments or examples.

In some implementations, when a user plane path exists, the existing user plane path can be directly used. That is, in step S2203, if the third network element determines that there is a suitable user plane path available for the first network element to use after receiving the message in step S2203, the intermediate steps can be ignored and step S2217 can be executed. In this case, when step 2117 is executed, the first response sent by the third network element to the first network element can include relevant user plane path information (i.e., path information of the existing user plane path that can be directly used), and then data can be provided from the access network device to the core network element via the relevant user plane path in subsequent steps. Alternatively, in step S2204, if the second network element determines that there is already a suitable user plane path available for use by the first network element after receiving the message in step S2204, the intermediate steps can be ignored and step S2216 can be executed. In this case, when step 2116 is executed, the second response sent by the second network element to the third network element can include relevant user plane path information (i.e., path information of the existing user plane path that can be directly used), and then data can be provided from the access network device to the core network element via the relevant user plane path through subsequent steps
In some implementations, when a user plane path exists, the existing user plane path can be modified. For a detailed introduction on "when to determine whether to modify the existing user plane path and the modification operation for the user plane path", please refer to the above embodiments. However, the difference between the embodiment in FIG. 2B and the embodiment in FIG. 2A is that in FIG. 2B, when the third network element receives the message in step S2203, if it is determined that there is a user plane path that can access the same data network and needs to be modified for use by the first network element, the necessary modification operation is performed, and the relevant user plane path information is sent to the first network element. Then, through subsequent steps, data is provided from the access network device to the core network element via the relevant user plane path. Alternatively, in step S2204, if the second network element receives the message in step S2204 and determines that there is already a user plane path connected to the same data network that can be provided to the first network element for use, and that the user plane path needs to be modified, the necessary modification operation is performed and the relevant user plane path information is sent to the first network element. Then, through subsequent steps, data is provided from the access network device to the core network element via the relevant user plane path.

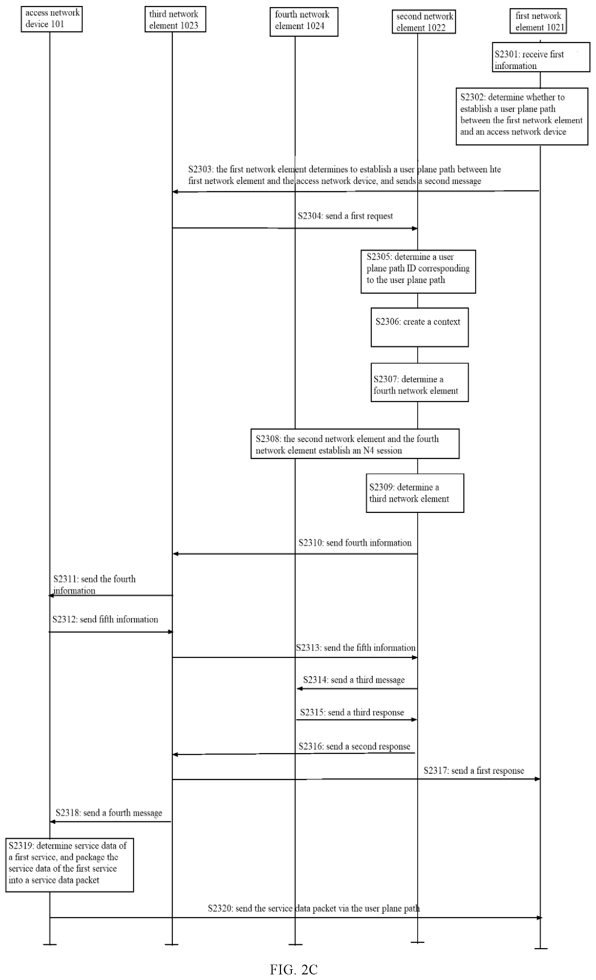

FIG. 2C is a schematic diagram of interaction in a path establishment method according to an embodiment of the present disclosure. As shown in FIG. 2C, this embodiment of the present disclosure relates to a path establishment method, applied in a communication system 100. The method includes the following steps.

At step 2301, a first network element receives first information.

At step 2302, the first network element determines whether to establish a user plane path between the first network element and an access network device.

At step 2303, the first network element determines to establish the user plane path between the first network element and the access network device, and the first network element sends a second message to a third network element.

At step 2304, the third network element sends a first request to a second network element.

At step 2305, the second network element determines a user plane path ID corresponding to the user plane path.

At step 2306, the second network element creates a context.

At step 2307, the second network element determines a fourth network element.

At step 2308, the second network element and the fourth network element establish an N4 session.

At step 2309, the second network element determines the third network element.

At step 2310, the second network element sends fourth information to the third network element.

At step 2311, the third network element sends the fourth information to the access network device.

At step 2312, the access network device sends fifth information to the third network element.

At step 2313, the third network element sends the fifth information to the second network element.

At step 2314, the second network element sends a third message to the fourth network element.

At step 2315, the fourth network element sends a third response to the second network element.

At step 2316, the second network element sends a second response to the third network element.

At step 2317, the third network element sends a first response to the first network element.

Optionally, any of steps 2315-2317 in the above process may be an optional step, which may be executed or omitted.

At step 2318, the third network element sends a fourth message to the access network device.

Optionally, the fourth message may include at least one of:
user plane information of the first network element;
second information, wherein the second information is configured to request data related to the first service; or
identification information of the user plane path.

Optionally, the second information in the fourth message may be determined by the third network element based on the second information included in the second message received from the first network element.

Optionally, the fourth message may be N2 Transport, but is not limited to this.

At step 2319, the access network device determines serviced data of the first service, and packages the service data of the first service into the service data packet.

At step 2320, the access network device sends the service data packet to the first network element via the user plane path.

For further detailed introduction to steps 2302-2320, please refer to the above embodiment description.

The path establishment method disclosed in embodiments of the present disclosure may include at least one of steps S2301 to S2320. For example, step S2301 can be implemented as an independent embodiment, step S2302 can be implemented as an independent embodiment, step S2303 can be implemented as an independent embodiment, and steps S2301+S2302 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

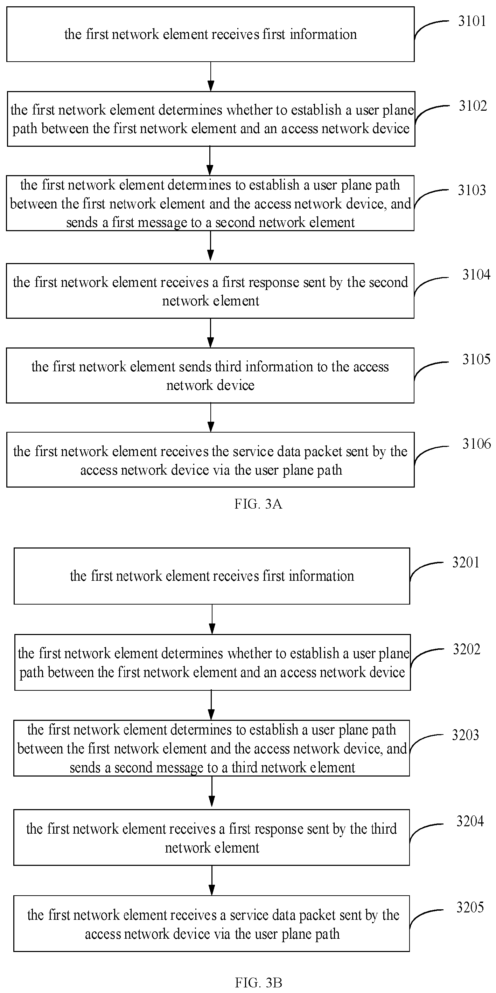

FIG. 3A is a schematic diagram of interaction in a path establishment method according to an embodiment of the present disclosure. As shown in FIG. 3A, this embodiment of the present disclosure relates to a path establishment method, applied in a first network element 1021. The method includes the following steps.

At step 3101, the first network element receives first information.

At step 3102, the first network element determines whether to establish a user plane path between the first network element and an access network device.

At step 3103, the first network element determines to establish a user plane path between the first network element and the access network device, and sends a first message to a second network element.

At step 3104, the first network element receives a first response sent by the second network element.

At step 3105, the first network element sends third information to the access network device.

At step 3106, the first network element receives the service data packet sent by the access network device via the user plane path.

For further detailed introduction to steps 3101-3106, please refer to the above embodiment description.

The path establishment method disclosed in embodiments of the present disclosure may include at least one of steps S3101 to S3106. For example, step S3101 can be implemented as an independent embodiment, step S3102 can be implemented as an independent embodiment, and steps S3101+S3102 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

FIG. 3B is a schematic diagram of interaction in a path establishment method according to an embodiment of the present disclosure. As shown in FIG.3B, this embodiment of the present disclosure relates to a path establishment method, applied in a first network element. The method includes the following steps.

At step 3201, the first network element receives first information.

At step 3202, the first network element determines whether to establish a user plane path between the first network element and an access network device.

At step 3203, the first network element determines to establish a user plane path between the first network element and the access network device, and sends a second message to a third network element.

At step 3204, the first network element receives a first response sent by the third network element.

At step 3205, the first network element receives a service data packet sent by the access network device via the user plane path.

For detailed introduction to steps 3201-3205, please refer to the above embodiment description.

The path establishment method disclosed in embodiments of the present disclosure may include at least one of steps S3201 to S3205. For example, step S3201 can be implemented as an independent embodiment, step S3202 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

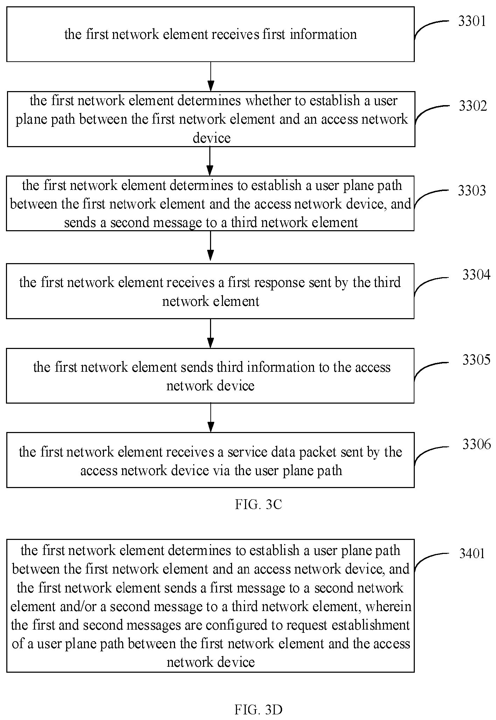

FIG. 3C is a schematic diagram of interaction in a path establishment method according to an embodiment of the present disclosure. As shown in FIG.3C, this embodiment of the present disclosure relates to a path establishment method, applied in a first network element. The method includes the following steps.

At step 3301, the first network element receives first information.

At step 3302, the first network element determines whether to establish a user plane path between the first network element and an access network device.

At step 3303, the first network element determines to establish a user plane path between the first network element and the access network device, and sends a second message to a third network element.

At step 3304, the first network element receives a first response sent by the third network element.

At step 3305, the first network element sends third information to the access network device.

At step 3306, the first network element receives a service data packet sent by the access network device via the user plane path.

For detailed introduction to steps 3301-3305, please refer to the above embodiment description.

The path establishment method disclosed in embodiments of the present disclosure may include at least one of steps S3301 to S3305. For example, step S3301 can be implemented as an independent embodiment, step S3302 can be implemented as an independent embodiment, and steps S3301+S3302 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

FIG. 3D is a schematic diagram of interaction in a path establishment method according to an embodiment of the present disclosure. As shown in FIG.3D, this embodiment of the present disclosure relates to a path establishment method, applied in a first network element. The method includes the following steps.

At step 3401, the first network element determines to establish a user plane path between the first network element and an access network device, and the first network element sends a first message to a second network element and/or a second message to a third network element, wherein the first and second messages are configured to request establishment of a user plane path between the first network element and the access network device.

Optionally, determining to establish a user plane path between the first network element and the access network device includes:
receiving first information, wherein the first information is related to a first service; and
determining whether to establish a user plane path between the first network element and the access network device based on at least one of the first information, the capability of the access network device, the network congestion state, or the capability of the core network.

Optionally, the first information includes at least one of:
information of the access network device, wherein the information of the access network device is configured to indicate the target access network device of the first service;
service area information, wherein the service area information is configured to indicate the target area of the first service;
service location information, wherein the service location information is configured to indicate the target location of the first service;
a requested service data type of the first service; or
requested QoS information of service data of the first service.

Optionally, the first message includes at least one of:
first indication information, wherein the first indication information indicates to establish a user plane path between the first network element and the access network device;
information of the access network device;
service area information, wherein the service area information is configured to indicate the target area of the first service;
service location information, wherein the service location information is configured to indicate the target location of the first service;
user plane information of the first network element; or
identification information of the user plane path.

Optionally, the user plane information of the first network element includes at least one of:
a network element identity (ID) of the first network element; or
an Internet protocol (IP) address of the first network element.

Optionally, the identification information of the user plane path includes:
a PDU session ID corresponding to the user plane path; or
a user plane path ID corresponding to the user plane path.

Optionally, the information of the access network device includes at least one of:
an identifier of the access network device;
an IP address of the access network device;
S-NSSAI supported by the access network device;
a CI list supported by the access network device; or
a TAI list supported by the access network device.

Optionally, the second message includes at least one of:
first indication information, wherein the first indication information indicates to establish a user plane path between the first network element and the access network device;
information of the access network device;
service area information, wherein the service area information is configured to indicate the target area of the first service;
service location information, wherein the service location information is configured to indicate the target location of the first service;
user plane information of the first network element;
second information, wherein the second information is configured to request data related to the first service; or
identification information of the user plane path.

Optionally, the method further includes:
receiving a first response sent by the second network element and/or the third network element, wherein the first response includes at least one of:
second indication information, wherein the second indication information indicates that the user plane path between the first network element and the access network device is accepted;
information of the access network device;
identification information of the user plane path; or
address information of the user plane path of the access network device.

Optionally, the method further includes at least one of:
sending third information to the access network device, wherein the third information includes at least one of second information, user plane information of the first network element, and identification information of the user plane path;
receiving a service data packets sent by the access network device via the user plane path.

Optionally, sending the third information to the access network device includes:
sending the third information to the access network device via the user plane path and/or a control plane path.

Optionally, sending the third information to the access network device via the control plane path includes:
sending the third information to the access network device via the third network element.

For detailed introduction to step 3401, please refer to the above embodiment description.

The path establishment method disclosed in embodiments of the present disclosure may include at least one of steps S3401 to S3403. For example, step S3401 can be implemented as an independent embodiment, step S3402 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

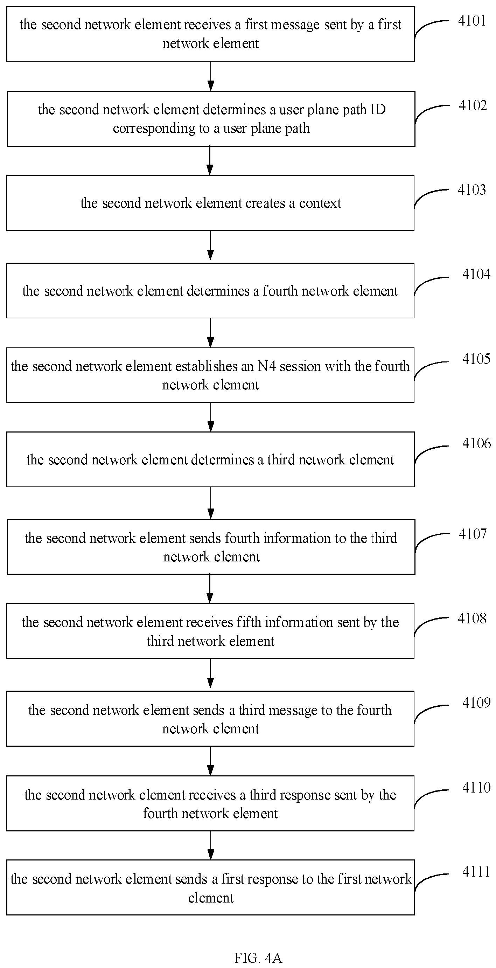

FIG. 4A is a schematic diagram of interaction in a path establishment method according to an embodiment of the present disclosure. As shown in FIG. 4A, this embodiment of the present disclosure relates to a path establishment method, applied in a second network element. The method includes the following steps.

At step 4101, the second network element receives a first message sent by a first network element.

At step 4102, the second network element determines a user plane path ID corresponding to a user plane path.

At step 4103, the second network element creates a context.

At step 4104, the second network element determines a fourth network element.

At step 4105, the second network element establishes an N4 session with the fourth network element.

At step 4106, the second network element determines a third network element.

At step 4107, the second network element sends fourth information to the third network element.

At step 4108, the second network element receives fifth information sent by the third network element.

At step 4109, the second network element sends a third message to the fourth network element.

At step 4110, the second network element receives a third response sent by the fourth network element.

At step 4111, the second network element sends a first response to the first network element.

For detailed introduction to steps 4101-4111, please refer to the above embodiment description.

The path establishment method disclosed in embodiments of the present disclosure may include at least one of steps S4101 to S4111. For example, step S4101 can be implemented as an independent embodiment, step S4102 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

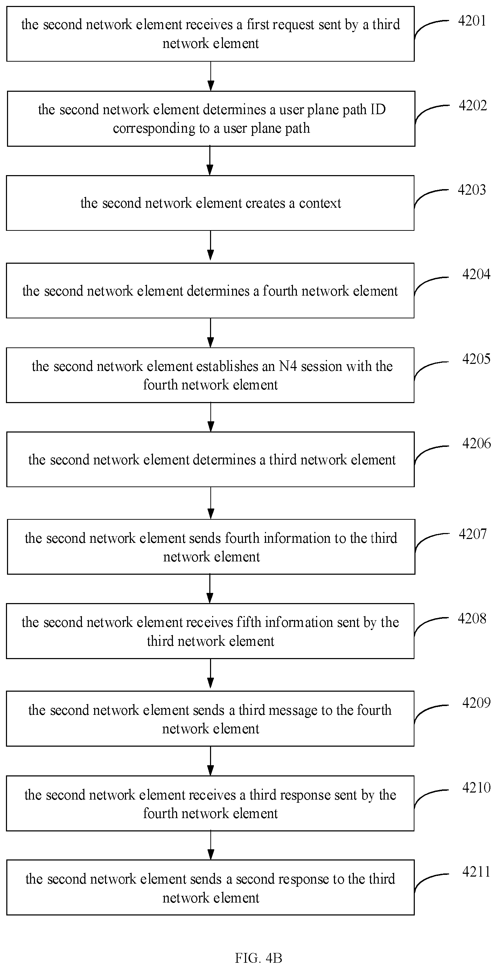

FIG. 4B is a schematic diagram of interaction in a path establishment method according to an embodiment of the present disclosure. As shown in FIG. 4B, this embodiment of the present disclosure relates to a path establishment method, applied in a second network element. The method includes the following steps.

At step 4201, the second network element receives a first request sent by a third network element.

At step 4202, the second network element determines a user plane path ID corresponding to a user plane path.

At step 4203, the second network element creates a context.

At step 4204, the second network element determines a fourth network element.

At step 4205, the second network element establishes an N4 session with the fourth network element.

At step 4206, the second network element determines a third network element.

At step 4207, the second network element sends fourth information to the third network element.

At step 4208, the second network element receives fifth information sent by the third network element.

At step 4209, the second network element sends a third message to the fourth network element.

At step 4210, the second network element receives a third response sent by the fourth network element.

At step 4211, the second network element sends a second response to the third network element.

For detailed introduction to steps 4201-4211, please refer to the above embodiment description.

The path establishment method disclosed in embodiments of the present disclosure may include at least one of steps S4201 to S4211. For example, step S4201 can be implemented as an independent embodiment, step S4202 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

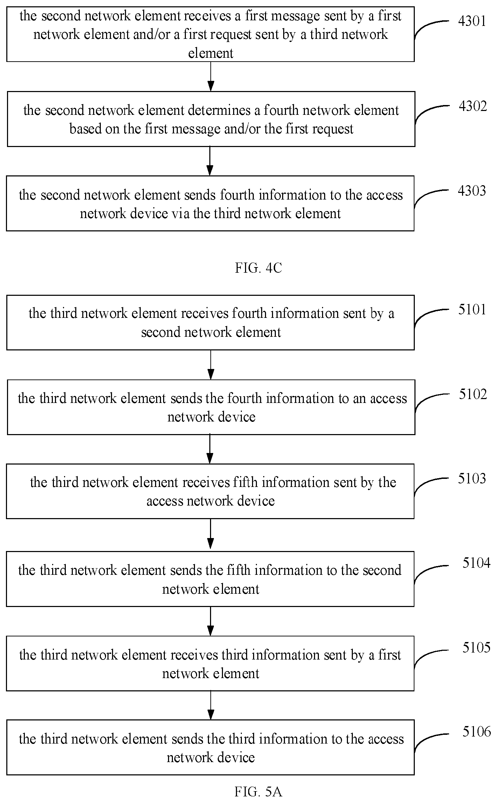

FIG. 4C is a schematic diagram of interaction in a path establishment method according to an embodiment of the present disclosure. As shown in FIG. 4C, this embodiment of the present disclosure relates to a path establishment method, applied in a second network element. The method includes the following steps.

At step 4301, the second network element receives a first message sent by a first network element and/or a first request sent by a third network element, wherein the first message and the first request are configured to indicate to establish a user plane path between the first network element and an access network device.

At step 4302, the second network element determines a fourth network element based on the first message and/or the first request, wherein the fourth network element is configured to provide a user plane function.

At step 4303, the second network element sends fourth information to the access network device via the third network element, wherein the fourth information includes identification information of the user plane path and/or core network tunnel information of the fourth network element; the core network tunnel information of the fourth network element indicates the fourth network element.

Optionally, the method further includes:
determining a user plane path ID corresponding to the user plane path;
creating a context for storing relevant information of the user plane path, wherein the user plane path is associated with at least one of the DNN of the first service, the S-NSSAI of the first service, or the access network device.

Optionally, the context includes:
a context related to the user plane path; or
a PDU session context corresponding to the user plane path.

Optionally, the first request includes at least one of:
identification information of the user plane path;
information of the access network device;
service area information, wherein the service area information is configured to indicate the target area of the first service;
service location information, wherein the service location information is configured to indicate the target location of the first service; or
user plane information of the first network element.

Optionally, the fourth information further includes at least one of:
information of the access network device;
service area information, wherein the service area information is configured to indicate the target area of the first service;
service location information, wherein the service location information is configured to indicate the target location of the first service;
user plane information of the first network element;
a requested QoS flow; or
relevant QoS parameters of the requested QoS flow.

Optionally, after determining the fourth network element, the method further includes:
establishing an N4 session with the fourth network element.

Optionally, before sending the fourth information to the access network device via the third network element, the method further includes:
determining the third network element based on the first message and/or the first request.

Optionally, the method further includes:
receiving fifth information sent by the third network element, wherein the fifth information includes identification information of the user plane path and/or access network tunnel information of the access network device; the access network tunnel information is configured to indicate the user plane path information of the access network device;
sending a third message to the fourth network element, wherein the third message is configured to provide the access network tunnel information and/or the identification information of the user plane path to the fourth network element for establishing a user plane path with the access network device.

Optionally, before receiving the fifth information sent by the third network element, the method further includes:
subscribing to the fifth information from the third network element by the second network element.

Optionally, the fifth information further includes first capability information, wherein the first capability information is configured to indicate whether the service data packet generated by the access network device includes the destination address of the service data packet packaged using the user plane information of the first network element.

Optionally, the third message further includes a forwarding rule, wherein the forwarding rule is configured to indicate the rule for forwarding the service data packet by the fourth network element, and the forwarding rule is determined based on the first capability information.

Optionally, the forwarding rule includes at least one of:
a first rule, wherein the first rule indicates forwarding the service data packet associated with the QoS flow identifier (QFI); or
a second rule, wherein the second rule indicates forwarding the service data packet based on the destination address of the service data packet.

Optionally, before sending the third message to the fourth network element, the method further includes:
determining that the forwarding rule is the first rule, in a case where the first capability information indicates that the service data packet generated by the access network device does not include the destination address of the service data packet packaged using the user plane information of the first network element;
determining that the forwarding rule is the second rule, in a case where the first capability information indicates that the service data packet generated by the access network device includes the destination address of the service data packet packaged using the user plane information of the first network element.

Optionally, the method further includes:
sending a first response to the first network element, wherein the first response includes at least one of:
second indication information, wherein the second indication information indicates that the user plane path between the first network element and the access network device is accepted;
information of the access network device;
identification information of the user plane path; or
address information of the user plane path of the access network device.

Optionally, the method further includes:
sending a second response to the third network element, wherein the second response includes at least one of:
second indication information, wherein the second indication information indicates that the user plane path between the first network element and the access network device is accepted;
information of the access network device;
identification information of the user plane path; or
address information of the user plane path of the access network device.

For detailed introduction to steps 4301-4303, please refer to the above embodiment description.

The path establishment method disclosed in embodiments of the present disclosure may include at least one of steps S4301 to S4306. For example, step S4301 can be implemented as an independent embodiment, step S4302 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

FIG. 5A is a schematic diagram of interaction in a path establishment method according to an embodiment of the present disclosure. As shown in FIG. 5A, this embodiment of the present disclosure relates to a path establishment method, applied in a third network element. The method includes the following steps.

At step 5101, the third network element receives fourth information sent by a second network element.

At step 5102, the third network element sends the fourth information to an access network device.

At step 5103, the third network element receives fifth information sent by the access network device.

At step 5104, the third network element sends the fifth information to the second network element.

At step 5105, the third network element receives third information sent by a first network element.

At step 5106, the third network element sends the third information to the access network device.

For detailed introduction to steps 5101-5106, please refer to the above embodiment description.

The path establishment method disclosed in embodiments of the present disclosure may include at least one of steps S5101 to S5106. For example, step S5101 can be implemented as an independent embodiment, step S5102 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

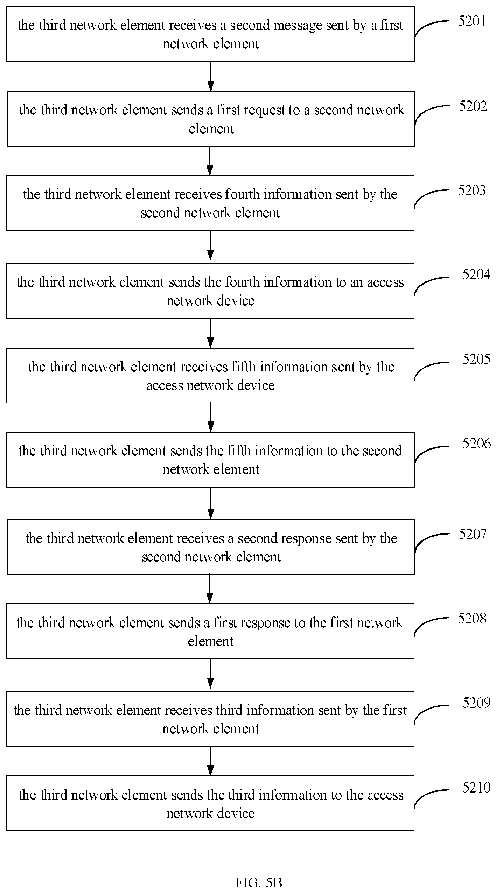

FIG. 5B is a schematic diagram of interaction in a path establishment method according to an embodiment of the present disclosure. As shown in FIG. 5B, this embodiment of the present disclosure relates to a path establishment method, applied in a third network element. The method includes the following steps.

At step 5201, the third network element receives a second message sent by a first network element.

At step 5202, the third network element sends a first request to a second network element.

At step 5203, the third network element receives fourth information sent by the second network element.

At step 5204, the third network element sends the fourth information to an access network device.

At step 5205, the third network element receives fifth information sent by the access network device.

At step 5206, the third network element sends the fifth information to the second network element.

At step 5207, the third network element receives a second response sent by the second network element.

At step 5208, the third network element sends a first response to the first network element.

At step 5209, the third network element receives third information sent by the first network element.

At step 5210, the third network element sends the third information to the access network device.

For detailed introduction to steps 5201-5210, please refer to the above embodiment description.

The path establishment method disclosed in embodiments of the present disclosure may include at least one of steps S5201 to S5210. For example, step S5201 can be implemented as an independent embodiment, step S5202 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

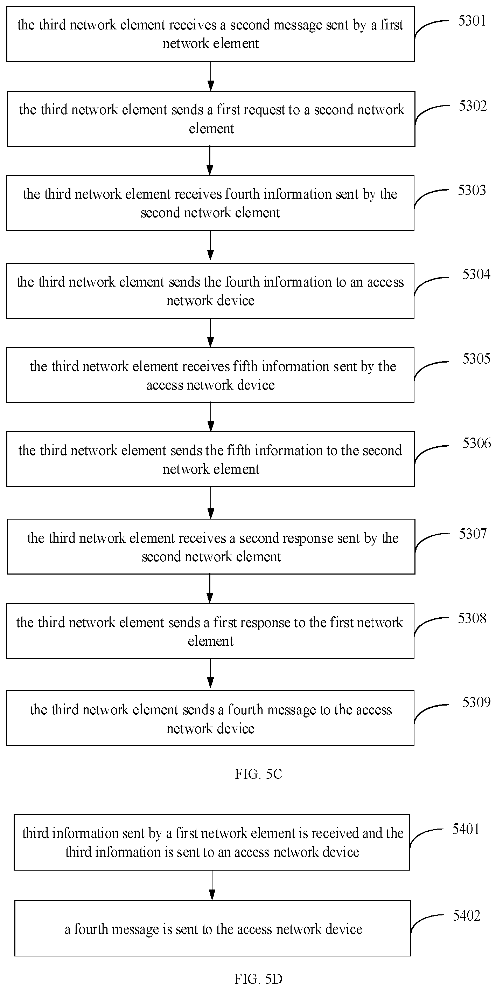

FIG. 5C is a schematic diagram of interaction in a path establishment method according to an embodiment of the present disclosure. As shown in FIG. 5C, this embodiment of the present disclosure relates to a path establishment method, applied in a third network element. The method includes the following steps.

At step 5301, the third network element receives a second message sent by a first network element.

At step 5302, the third network element sends a first request to a second network element.

At step 5303, the third network element receives fourth information sent by the second network element.

At step 5304, the third network element sends the fourth information to an access network device.

At step 5305, the third network element receives fifth information sent by the access network device.

At step 5306, the third network element sends the fifth information to the second network element.

At step 5307, the third network element receives a second response sent by the second network element.

At step 5308, the third network element sends a first response to the first network element.

At step 5309, the third network element sends a fourth message to the access network device.

For detailed introduction to steps 5301-5309, please refer to the above embodiment description.

The path establishment method disclosed in embodiments of the present disclosure may include at least one of steps S5301 to S5309. For example, step S5301 can be implemented as an independent embodiment, step S5302 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

FIG. 5D is a schematic diagram of interaction in a path establishment method according to an embodiment of the present disclosure. As shown in FIG. 5D, this embodiment of the present disclosure relates to a path establishment method, applied in a third network element. The method includes the following steps.

At step 5401, third information sent by a first network element is received and the third information is sent to an access network device.

At step 5402, a fourth message is sent to the access network device, wherein the fourth message includes at least one of user plane information of the first network element, second information, or identification information of a user plane path.

Optionally, the third information includes at least one of second information, user plane information of the first network element, or identification information of the user plane path; wherein, the second information is configured to request data related to a first service.

Optionally, the third information is configured to request the access network device to transmit data requested by the second information via the user plane path; the fourth message is configured to request the access network device to transmit the data requested by the second information via the user plane path.

Optionally, the method further includes:
receiving by the third network element, fourth information sent by a second network element, wherein the fourth information includes identification information of the user plane path and/or core network tunnel information of the fourth network element; the core network tunnel information of the fourth network element indicates the fourth network element; the fourth information is configured to establish a user plane path between the first network element and the access network device; and
sending by the third network element, the fourth information to the access network device.

Optionally, the fourth information further includes at least one of:
information of the access network device;
service area information, wherein the service area information is configured to indicate the target area of the first service;
service location information, wherein the service location information is configured to indicate the target location of the first service;
user plane information of the first network element;
a requested QoS flow; or
relevant QoS parameters of the requested QoS flow.

Optionally, the method further includes:
receiving fifth information sent by the access network device, wherein the fifth information includes identification information of the user plane path and/or access network tunnel information of the access network device; the access network tunnel information is configured to indicate the user plane path information of the access network device; the fifth information is configured to establish a user plane path between the first network element and the access network device; and
sending the fifth information to the third network element.

Optionally, before the third network element receives the fourth information sent by the second network element, the method further includes:
receiving a second message sent by the first network element, wherein the second message is configured to request establishment of a user plane path between the first network element and the access network device; and
sending a first request to the second network element, wherein the first request is configured to indicate to establish a user plane path between the first network element and the access network device.

Optionally, the method further includes:
receiving a second response sent by the second network element, wherein the second response includes at least one of:
second indication information, wherein the second indication information indicates that the user plane path between the first network element and the access network device is accepted;
information of the access network device;
identification information of the user plane path; or
address information of the user plane path.

Optionally, the method further includes:
sending a first response to the first network element, wherein the first response includes at least one of:
second indication information, wherein the second indication information indicates that the user plane path between the first network element and the access network device is accepted;
information of the access network device;
identification information of the user plane path; or
address information of the user plane path.

For detailed introduction to steps 5401-5402, please refer to the above embodiment description.

The path establishment method disclosed in embodiments of the present disclosure may include at least one of steps S5401 to S5409. For example, step S5401 can be implemented as an independent embodiment, step S5402 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

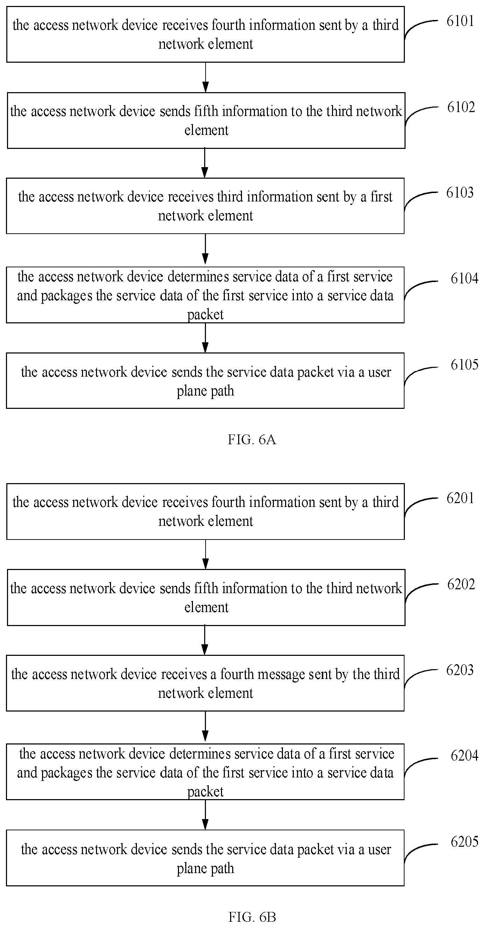

FIG. 6A is a schematic diagram of interaction in a path establishment method according to an embodiment of the present disclosure. As shown in FIG. 6A, this embodiment of the present disclosure relates to a path establishment method, applied in an access network device. The method includes the following steps.

At step 6101, the access network device receives fourth information sent by a third network element.

At step 6102, the access network device sends fifth information to the third network element.

At step 6103, the access network device receives third information sent by a first network element.

At step 6104, the access network device determines service data of a first service and packages the service data of the first service into a service data packet.

At step 6105, the access network device sends the service data packet via a user plane path.

For detailed introduction to steps 6101-6105, please refer to the above embodiment description.

The path establishment method disclosed in embodiments of the present disclosure may include at least one of steps S6101 to S6105. For example, step S6101 can be implemented as an independent embodiment, step S6102 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

FIG. 6B is a schematic diagram of interaction in a path establishment method according to an embodiment of the present disclosure. As shown in FIG. 6B, this embodiment of the present disclosure relates to a path establishment method, applied in an access network device. The method includes the following steps.

At step 6201, the access network device receives fourth information sent by a third network element.

At step 6202, the access network device sends fifth information to the third network element.

At step 6203, the access network device receives a fourth message sent by the third network element.

At step 6204, the access network device determines service data of a first service and packages the service data of the first service into a service data packet.

At step 6205, the access network device sends the service data packet via a user plane path.

For detailed introduction to steps 6201-6205, please refer to the above embodiment description.

The path establishment method disclosed in embodiments of the present disclosure may include at least one of steps S6201 to S6205. For example, step S6201 can be implemented as an independent embodiment, step S6202 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

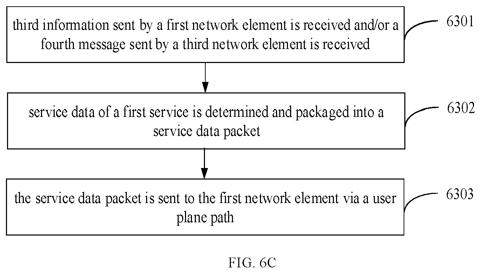

FIG. 6C is a schematic diagram of interaction in a path establishment method according to an embodiment of the present disclosure. As shown in FIG. 6C, this embodiment of the present disclosure relates to a path establishment method, applied in an access network device. The method includes the following steps.

At step 6301, third information sent by a first network element is received and/or a fourth message sent by a third network element is received.

At step 6302, service data of a first service is determined and packaged into a service data packet.

At step 6303, the service data packet is sent to the first network element via a user plane path.

Optionally, the third information and the fourth message are configured to request the access network device to transmit the data requested by the second information via the user plane path.

Optionally, the third information includes at least one of second information, user plane information of the first network element, or identification information of the user plane path; the fourth message includes at least one of the user plane information of the first network element, the second information, or the identification information of the user plane path; wherein the second information is configured to request data related to the first service.

Optionally, the method further includes:
receiving, by the access network device, fourth information sent by the third network element, wherein the fourth information includes the identification information of the user plane path and/or core network tunnel information of the fourth network element; the core network tunnel information of the fourth network element indicates the fourth network element; the fourth information is configured to establish the user plane path between the first network element and the access network device; and
sending fifth information to the third network element, wherein the fifth information includes the identification information of the user plane path and/or access network tunnel information of the access network device; the access network tunnel information is configured to indicate the user plane path information of the access network device; the fifth information is configured to establish the user plane path between the first network element and the access network device.

Optionally, the fifth information further includes first capability information, wherein the first capability information is configured to indicate whether the service data packet generated by the access network device includes the destination address of the service data packet packaged using the user plane information of the first network element.

Optionally, the service data packet includes the destination address of the service data packet packaged using the user plane information of the first network element, or the service data packet does not include the destination address of the service data packet packaged using the user plane information of the first network element.

Optionally, receiving the third information sent by the first network element includes:
receiving the third information sent by the first network element via the user plane path and/or a control plane path.

Optionally, receiving the third information sent by the first network element via the control plane path includes:
receiving the third information sent by the first network element via the third network element.

For detailed introduction to steps 6301-6302, please refer to the above embodiment description.

The path establishment method disclosed in embodiments of the present disclosure may include at least one of steps S6301 to S6302. For example, step S6301 can be implemented as an independent embodiment, step S6302 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

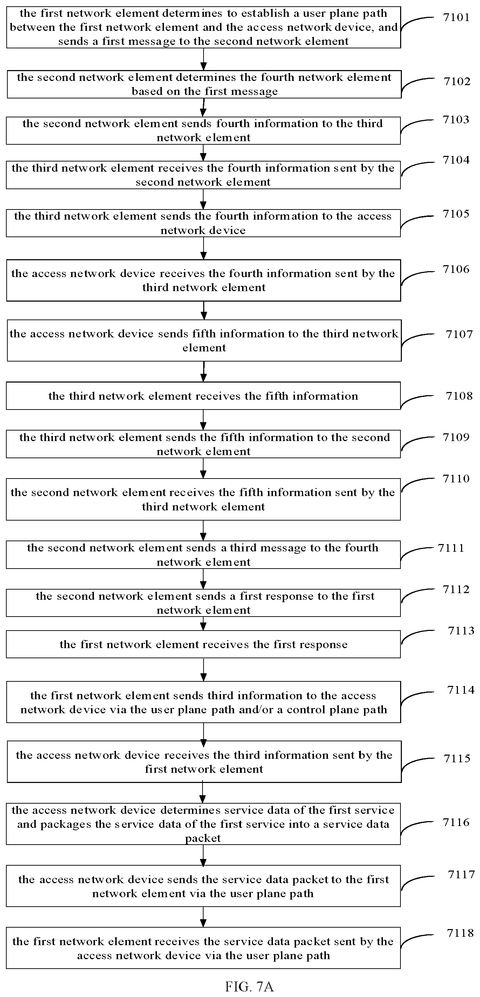

FIG. 7A is a schematic diagram of interaction in a path establishment method according to an embodiment of the present disclosure. As shown in FIG. 7A, this embodiment of the present disclosure relates to a path establishment method, applied in a communication system. The communication system includes an access network device, a first network element, a second network element, a third network element and a fourth network element, and the method includes the following steps.

At step 7101, the first network element determines to establish a user plane path between the first network element and the access network device, and sends a first message to the second network element, wherein the first message is configured to request establishment of a user plane path between the first network element and the access network device.

At step 7102, the second network element determines the fourth network element based on the first message, wherein the fourth network element is configured to provide a user plane function.

At step 7103, the second network element sends fourth information to the third network element, wherein the fourth information includes identification information of the user plane path and/or core network tunnel information of the fourth network element; the core network tunnel information of the fourth network element indicates the fourth network element.

At step 7104, the third network element receives the fourth information sent by the second network element.

At step 7105, the third network element sends the fourth information to the access network device.

At step 7106, the access network device receives the fourth information sent by the third network element.

At step 7107, the access network device sends fifth information to the third network element, wherein the fifth information includes the identification information of the user plane path and/or access network tunnel information of the access network device; the access network tunnel information is configured to indicate the user plane path information of the access network device.

At step 7108, the third network element receives the fifth information.

At step 7109, the third network element sends the fifth information to the second network element.

At step 7110, the second network element receives the fifth information sent by the third network element.

At step 7111, the second network element sends a third message to the fourth network element, wherein the third message is configured to provide the access network tunnel information and/or the identification information of the user plane path to the fourth network element for establishing the user plane path with the access network device.

At step 7112, the second network element sends a first response to the first network element, wherein the first response includes at least one of second indication information, information of the access network device, identification information of the user plane path, and address information of the user plane path of the access network device, wherein the second indication information indicates that the user plane path between the first network element and the access network device is accepted.

At step 7113, the first network element receives the first response.

At step 7114, the first network element sends third information to the access network device via the user plane path and/or a control plane path, wherein the third information includes at least one of second information, user plane information of the first network element, or identification information of the user plane path.

At step 7115, the access network device receives the third information sent by the first network element.

At step 7116, the access network device determines service data of the first service and packages the service data of the first service into a service data packet, wherein the service data packet includes a destination address of the service data packet packaged using the user plane information of the first network element, or the service data packet does not include the destination address of the service data packet packaged using the user plane information of the first network element.

At step 7117, the access network device sends the service data packet to the first network element via the user plane path.

At step 7118, the first network element receives the service data packet sent by the access network device via the user plane path.

For optional implementations of steps 7101-7118, please refer to the above embodiment description.

In some embodiments, the above method may include the methods described in the embodiments on the communication system side, the access network device side, the first network element side, the second network element side, the third network element side, the fourth network element side, etc., which will not be repeated here

The path establishment method disclosed in embodiments of the present disclosure may include at least one of steps S7101 to S7118. For example, step S7101 can be implemented as an independent embodiment, step S7102 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

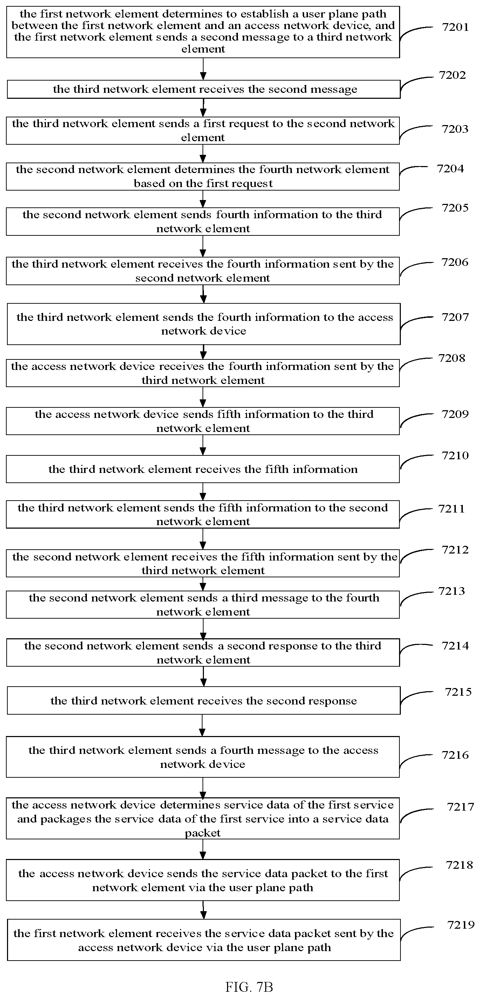

FIG. 7B is a schematic diagram of interaction in a path establishment method according to an embodiment of the present disclosure. As shown in FIG. 7B, this embodiment of the present disclosure relates to a path establishment method, applied in a communication system. The communication system includes an access network device, a first network element, a second network element, a third network element and a fourth network element, and the method includes the following steps.

At step 7201, the first network element determines to establish a user plane path between the first network element and an access network device, and the first network element sends a second message to a third network element, wherein the second message is configured to request establishment of the user plane path between the first network element and the access network device.

At step 7202, the third network element receives the second message.

At step 7203, the third network element sends a first request to the second network element, wherein the first request is configured to indicate the establishment of the user plane path between the first network element and the access network device.

At step 7204, the second network element determines the fourth network element based on the first request, wherein the fourth network element is configured to provide a user plane function.

At step 7205, the second network element sends fourth information to the third network element, wherein the fourth information includes identification information of the user plane path and/or core network tunnel information of the fourth network element, and the core network tunnel information of the fourth network element indicates the fourth network element.

At step 7206, the third network element receives the fourth information sent by the second network element.

At step 7207, the third network element sends the fourth information to the access network device.

At step 7208, the access network device receives the fourth information sent by the third network element.

At step 7209, the access network device sends fifth information to the third network element, wherein the fifth information includes the identification information of the user plane path and/or access network tunnel information of the access network device, and the access network tunnel information is configured to indicate user plane path information of the access network device.

At step 7210, the third network element receives the fifth information.

At step 7211, the third network element sends the fifth information to the second network element.

At step 7212, the second network element receives the fifth information sent by the third network element.

At step 7213, the second network element sends a third message to the fourth network element, wherein the third message is configured to provide the access network tunnel information and/or the identification information of the user plane path to the fourth network element for establishing the user plane path with the access network device.

At step 7214, the second network element sends a second response to the third network element, wherein the second response includes at least one of second indication information, information of the access network device, identification information of the user plane path, or address information of the user plane path of the access network device, and the second indication information indicates that the user plane path between the first network element and the access network device is accepted.

At step 7215, the third network element receives the second response.

At step 7216, the third network element sends a fourth message to the access network device, wherein the fourth message includes at least one of user plane information of the first network element, second information, or identification information of the user plane path, and the second information is configured to request data related to the first service.

At step 7217, the access network device determines service data of the first service and packages the service data of the first service into a service data packet, wherein the service data packet includes a destination address of the service data packet packaged using the user plane information of the first network element, or the service data packet does not include the destination address of the service data packet packaged using the user plane information of the first network element.

At step 7218, the access network device sends the service data packet to the first network element via the user plane path.

At step 7219, the first network element receives the service data packet sent by the access network device via the user plane path.

For optional implementations of steps 7201-7219, please refer to the above embodiment description.

In some embodiments, the above method may include the methods described in the embodiments on the communication system side, the access network device side, the first network element side, the second network element side, the third network element side, the fourth network element side, etc., which will not be repeated here

The path establishment method disclosed in embodiments of the present disclosure may include at least one of steps S7201 to S7219. For example, step S7201 can be implemented as an independent embodiment, step S7202 can be implemented as an independent embodiment, but not limited to these.

In this embodiment or implementation, each step can be independent, arbitrarily combined, or exchanged in order without contradiction, and optional implementations or examples can be arbitrarily combined, and can be arbitrarily combined with any steps of other embodiments or implementations.

The following is an exemplary introduction to the above methods.

In the following embodiments, the position service is described as example, the service NF is LMF. The method can also be applied to other service e.g. sensing service, in which case the service data is exchange between the (R)AN and the sensing network function e.g. SF via user plane, to implement the method for sensing service, the sensing network function e.g. SF is used instead of the LMF in the following embodiments.

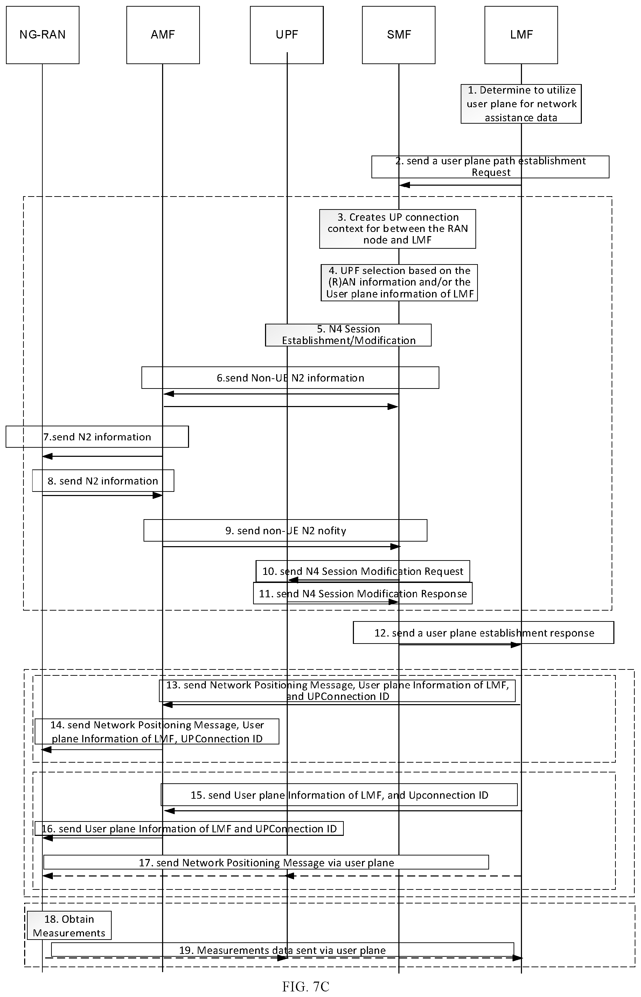

FIG. 7C is a schematic flowchart of a path establishment method according to an embodiment of the present disclosure. As shown in FIG. 7C, the method may include the following steps.
1. The LMF determines to utilize user plane for network assistance data.

The LMF can make the decision based on the positioning service request information (i.e., the first information in the above embodiments), the network congestion state, the capability of the (R)AN and core network supporting user plane connection and other factors for obtaining positioning data.

The LMF receives positioning service request(s) from UE, AF or 5GC NF, which may include the target (R)AN node identified.

2. The LMF sends the user plane establishment request (i.e., the first message in the above embodiments) to the SMF.

A new SMF service operation is defined and it is invoked by the LMF to send the user plane connection establishment request, the target (R)AN information (i.e., the information of the access network device in the above embodiments) is included. Alternatively, the (R)AN information is not included but the area or location for collecting the positioning data is included and the target (R)AN node can be determined based on the area or location for collecting the positioning data.

Optionally, the user plane information of LMF (i.e., the user plane information of the first network element in the above embodiments) may be included.

Alternative to define new service operation, PDU establishment procedure may be applied by invoking Nsmf_PDUSession_Create or Nsmf_PDUSession_CreateSMContext operation in this step, and the target (R)AN information and the indication indicating that the session is non-UE PDU session or PDU session between (R)AN and the LMF are included.

3-11. The SMF initiates the user plane connection establishment and interacts with (R)AN via AMF, AMF, and UPF to establish the user plane connection between the (R)AN and the LMF.

3. The SMF creates user plane (UP) connection context for the connection to be established between the RAN node and LMF. The SMF can allocate identifier for the user plane connection (i.e., the identification information of the user plane path in the above embodiments) which may be associated with the DNN/S-NSSAI for the positioning service and/or the (R)AN node to be connected, and the related information is stored in SMF. Alternatively, the identifier for the connection is allocation by the LMF and included in step 2.

4. The SMF performs the UPF selection based on the (R)AN information and/or the LMF info for the user plane connection.

5. The SMF performs N4 Session Establishment with the UPF selected in step 4.

6. The SMF transfers the non-UE N2 information to AMF for the identified (R)AN with the UP connection ID (i.e., the identification information of the user plane path in the above embodiments), the CN tunnel info of the selected N3 UPF (i.e., the core network tunnel information of the fourth network element in the above embodiments), optional the Qos flow to be requested with related QoS profile and optional the user plane information of the SF (e.g. the IP address of the SF).

Before invoking the service in this step, the AMF can be selected based on the information of the (R)AN to be connected, e.g. the TAI list or CI list the (R)AN supported, and/or the capability supported for the non-UE user plane connection.

The SMF may subscribe from the same AMF for the non-UE N2 information for the non-UE user plane connection being managed (established/ modified/ released). Alternatively, the SMF may subscribe for all the possible AMF(s) connected with the (R)AN to be connected for the non-UE N2 information for the non-UE user plane connection being managed (established/ modified/ released).

7. The AMF forwards to the identified (R)AN with the non-UE N2 information as step 6.

8. The N2 information is sent from the (R)AN to the AMF with AN tunnel information (i.e., the access network tunnel information in the above embodiments) used for the requested user plane connection. The (R)AN may include its ability to generate the positioning data packet (i.e., the first capability information in the above embodiments) as required in step 6.

9. The AMF notifies the non-UE N2 information received from (R)AN to the SMF. The Namf_Communication_NonUeN2InfoNotify service is invoked as an example. The user plane connection identifier may be used to differentiate different non-UE N2 information for UP connection management.

10-11. The SMF performs the N4 Session Modification procedure with the UPF. The SMF provides AN Tunnel Info to the UPF as well as the corresponding forwarding rules.

Alternative to steps 3-11, PDU establishment procedure may be applied with update that the PDU session is not associated with any UE with user plane path along (R)AN-UPF-LMF. If so,
- in step 3, PDU session ID and PDU session context is maintained instead;
- in step 6, the amf_Communication_N1N2MessageTransfer service is invoked to transfer the N2 SM information (N2 session management information) to the (R)AN via the AMF;
- in step 7 and step 8, the N2 PDU Session Request/Response is used for transport the N2 information between AMF and the (R)AN
- in step 9, Nsmf_PDUSession_UpdateSMContext Request service is invoked.

12. The SMF sends the user plane establishment response (i.e., the first response in the above embodiments) to the LMF.

The response to step 2 is sent to the LMF, the target (R)AN information is included. It indicates that the user plane connection between the (R)AN and the LMF is accepted, the UPConnection ID and optionally the UPConnection Address to identify the AN tunnel for the (R)AN node within the established user plane connection are included.

13-14. The Network Positioning Message (i.e., the second information in the above embodiments) is sent from the LMF to the (R)AN via the AMF, for requesting network data related to the positioning service serving the positioning service request, and optionally, the User plane Information of the LMF, and the UPConnection ID established between (R)AN and the LMF are included.

15-17. Alternative to steps 13-14, the Network Positioning Message is sent via the user plane connection established.

The user plane Information of the LMF, and the UPConnection ID established between (R)AN and the LMF are sent from the LMF to the (R)AN via the AMF.

18. The (R)AN obtains the requested measurement data for the positioning service.

19. The measurements data is sent via the user plane connection established.

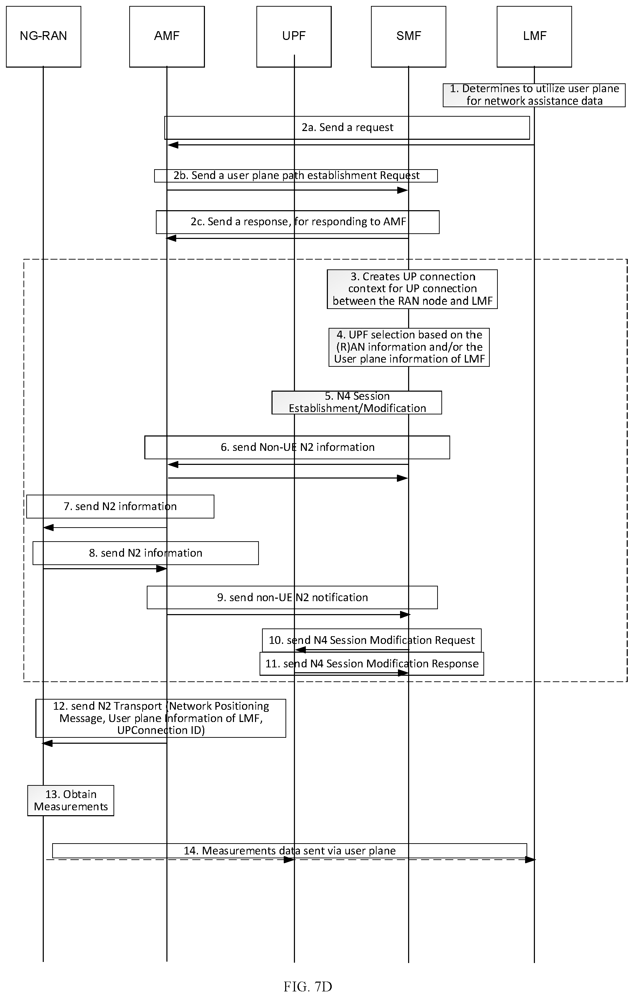

FIG. 7D is a schematic flowchart of a path establishment method according to an embodiment of the present disclosure. As shown in FIG. 7D, the method may include the following steps.

The procedure in FIG. 7D is same as that described in FIG. 7C with the following clarification:

Step 2a. The LMF sends the service request (i.e., the second message in the above embodiments) to the AMF with information indicating that the user plane connection between the (R)AN and the LMF is needed.

The information indicating that the user plane connection between the (R)AN and the LMF is needed can be implied by the user plane information if available, or an dedicated indication indicating that the user plane connection between the (R)AN and the LMF is needed is included.

The UPConnection ID or the PDU session ID for the user plane connection may be included.

The network positioning message may also be included, which is used to request network data related to the positioning service serving the positioning service request.

Step 2b. The AMF sends the user plane connection establishment request to the SMF.

Similar as step in clause 2.2.1, the PDU session establishment procedure may be reused with update that the PDU session is not associated with any UE but just with UP path along (R)AN-UPF-LMF, and alternatively, a new procedure for UP connection establishment may be used.

Step 2c. The SMF responds to the AMF. For example, it may be that in the above embodiments, the SMF sends the second response to the AMF.

Step 3-11. Same as steps 3-11 in clause 2.2.1.

Step 12. After the user plane is established successfully, the AMF forwards the network positioning message received in step 2a to the (R)AN, which may also include the user plane information of the LMF, as well as the user plane path ID established between the (R)AN and the LMF. Alternatively, if step 2a does not include the network positioning message, the LMF can send the service request to the (R)AN after the LMF receives the completion of the user plane path establishment, similar to steps 13-17 in clause 2.2.1.

Step 13. Same as step 18 in clause 2.2.1.

Step 14. Same as step 19 in clause 2.2.1.

Embodiments of the disclosure also provide an apparatus for implementing any one of the above methods. For example, an apparatus is provided, including units for performing the steps executed by the terminal in any one of the above methods. Further, another apparatus is provided, including units or modules for performing the steps executed by the network device (for example, the access network device, the core network function node, the core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

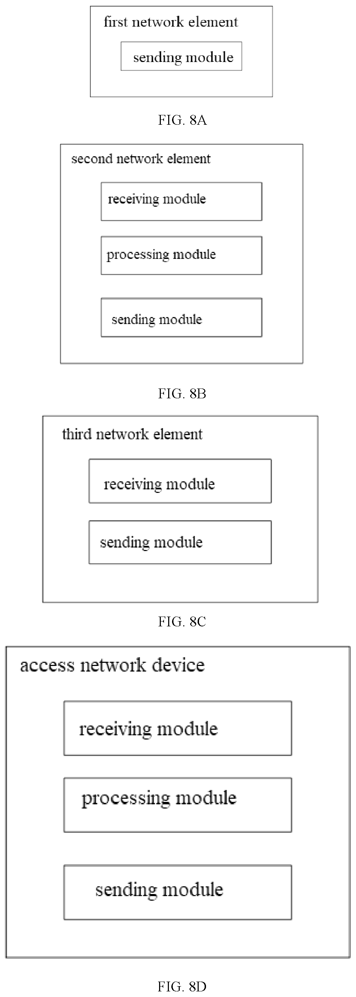

FIG. 8A is a block diagram of a first network element according to an embodiment of the present disclosure. As shown in FIG. 8A, the first network element includes:
a sending module, configured to determine to establish a user plane path between the first network element and an access network device, and send a first message to a second network element and/or a second message to a third network element, wherein the first message and the second message are configured to request establishing the user plane path between the first network element and the access network device.

Optionally, the above sending module is configured to perform the steps related to "sending" performed by the first network element in any of the above methods. Optionally, the first network element also includes at least one of a processing module and a receiving module. The above processing module is configured to perform the steps related to "processing" performed by the first network element in any of the above methods, which will not be repeated here. The above receiving module is configured to perform the receiving related steps executed by the first network element in any of the above methods, which will not be repeated here.

FIG. 8B is a block diagram of a second network element according to an embodiment of the present disclosure. As shown in FIG. 8B, the second network element includes:
a receiving module, configured to receive a first message sent by a first network element and/or a first request sent by a third network element, wherein the first message and the first request are configured to indicate to establish a user plane path between the first network element and an access network device;
a processing module, configured to determine a fourth network element according to the first message and/or the first request, wherein the fourth network element is configured to provide a user plane function; and
a sending module, configured to send fourth information to the access network device via a third network element, wherein the fourth information includes identification information of the user plane path and/or core network tunnel information of the fourth network element, and the core network tunnel information of the fourth network element indicates the fourth network element.

Optionally, the above processing module is configured to perform the "processing" related steps performed by the second network element in any of the above methods, the above receiving module is configured to perform the receiving related steps performed by the second network element in any of the above methods, and the above sending module is configured to perform the sending related steps performed by the second network element in any of the above methods, which will not be repeated here.

FIG. 8C is a block diagram of a third network element according to an embodiment of the present disclosure. As shown in FIG. 8C, the third network element includes:
a receiving module, configured to receive third information sent by a first network element, and send the third information to an access network device, wherein the third information includes at least one of second information, user plane information of the first network element, or identification information of a user plane path, wherein the second information is configured to request data associated with a first service, and the third information is configured to request the access network device to transmit data requested by the second information via the user plane path; and
a sending module, configured to send a fourth message to an access network device, wherein the fourth message includes at least one of user plane information of a first network element, second information, or identification information of a user plane path, and the fourth message is configured to request the access network device to transmit data requested by the second information via the user plane path.

Optionally, the above receiving module is configured to perform the receiving related steps performed by the third network element in any of the above methods, the above sending module is configured to perform the sending related steps performed by the third network element in any of the above methods, the above receiving module is configured to perform the receiving related steps performed by the third network element in any of the above methods, and optionally, the third network element also includes a processing module, which is configured to perform the processing related steps performed by the third network element in any of the above methods, which will not be repeated here.

FIG. 8D is a block diagram of an access network device according to an embodiment of the present disclosure. As shown in FIG. 8D, the access network device includes:
a receiving module, configured to receive third information sent by a first network element and/or a fourth message sent by a third network element, wherein the third information includes at least one of second information, user plane information of the first network element, or identification information of a user plane path, the fourth message includes at least one of user plane information of the first network element, second information or identification information of a user plane path, wherein the second information is configured to request data associated with a first service, and the third information and the fourth message are configured to request the access network device to transmit data requested by the second information via a user plane path;
a processing module, configured to determine service data of the first service, and packaging the service data of the first service into a service data packet; and
a sending module, configured to send the service data packet to the first network element via the user plane path.

Optionally, the above receiving module is configured to perform the steps related to "receiving" performed by the access network device in any of the above methods, the above sending module is configured to perform the steps related to "sending" performed by the access network device in any of the above methods, and the above processing module is configured to perform the steps related to "processing" performed by the access network device in any of the above methods, which will not be repeated here.

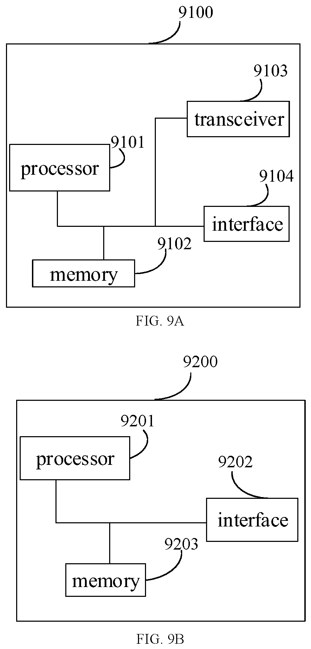

FIG. 9A is a block diagram of a communication device 9100 according to an embodiment of the disclosure. The communication device 9100 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 9100 may be configured to implement the method in the above method embodiments. For details, please refer to the description in the above method embodiments.

As shown in FIG. 9A, the communication device 9100 may include one or more processors 9101. The processor 9101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data. The processor 9101 is configured to call instructions so that the communication device 9100 may implement any one of the above methods.

In some embodiments, the communication device 9100 may also include one or more memories 9102 for storing instructions. Optionally, all or some of the memories 9102 may also be located outside the communication device 9100.

In some embodiments, the communication device 9100 further includes one or more transceivers 9103. When the communication device 9100 includes one or more transceivers 9103, the communication steps such as sending and receiving in the above methods are performed by the transceiver 9103, and other steps are performed by the processor 9101.

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 9100 further includes one or more interface circuits 9104. The interface circuit 9104 is connected to the memory 9102. The interface circuit 9104 may be configured to receive signals from the memory 9102 or other devices, and may be configured to send the signals to the memory 9102 or other devices. For example, the interface circuit 9104 may read instructions stored in the memory 9102 and send the instructions to the processor 9101.

The communication device 9100 described in the above embodiments may be a network device or a terminal, but the scope of the communication device 9100 described in the disclosure is not limited, and a structure of the communication device 9100 may not be limited by FIG. 9A. The communication device may be a stand-alone device or may be a part of a larger device. For example, the communication device may be the following: (1) a stand-alone integrated circuit (IC), or a chip, or a system on chip or a subsystem; (2) a set of one or more ICs, optionally, which may also include a storage component for storing data and a computer program: (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

FIG. 9B is a block diagram of a chip 9200 according to an embodiment of the disclosure. For a case where the communication device 9100 may be a chip or a chip system, reference may be made to the block diagram of the chip 9200 shown in FIG. 9B, which it is not limited herein.

The chip 9200 includes one or more processors 9201. The processor 9201 is configured to call the instructions to cause the chip 9200 to execute any one of the above methods.

In some embodiments, the chip 9200 further includes one or more interface circuits 9202. The interface circuit 9202 is connected to a memory 9203. The interface circuit 9202 may be configured to receive signals from the memory 9203 or other devices, and may be configured to send the signals to the memory 9203 or other devices. For example, the interface circuit 9202 may read the instructions stored in the memory 9203 and send the instructions to the processor 9201. Optionally, the terms such as interface circuit, interface, transceiver pin, transceiver, etc. may be used interchangeably.

In some embodiments, the chip 9200 further includes one or more memories 9203 for storing instructions. Optionally, all or some of the memories 9203 may be located outside the chip 9200.

The disclosure also provides a storage medium for storing instructions. When the instructions are running on the communication device 9100, the communication device 9100 is caused to implement any one of the above methods. Optionally, the above storage medium is an electronic storage medium. Optionally, the above storage medium is a computer-readable storage medium, which is not limited herein. The above storage medium may also be a storage medium readable by other devices. Optionally, the above storage medium may be a non-transitory storage medium, which is not limited to herein. The above storage medium may also be a transitory storage medium.

The disclosure also provides a program product. When the program product is executed by the communication device 9100, the communication device 9100 is caused to implement any one of the above methods. Optionally, the above program product is a computer program product.

The disclosure also provides a computer program. When the computer program is running on a computer, the computer is caused to implement any one of the above methods.

In the above embodiments, the functions may be fully or partially implemented by software, hardware, firmware, or any combination thereof. When implemented by software, the functions may be implemented in whole or in part in the form of a computer program product. The computer program product includes one or more computer programs. Procedures or functions according to embodiments of the disclosure are fully or partially generated when the computer program is loaded and executed on a computer. The computer may be a general-purpose computer, a special-purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), a semiconductor medium (such as a solid state disk (SSD)), or the like.

Those skilled in the related art may realize that units and algorithm steps of the examples described in embodiments of the disclosure may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the disclosure.

Those skilled in the related art may clearly understand that, for a specific working process of a system, an apparatus and a unit described above, reference may be made to a corresponding process in the above method embodiments, which will not be repeated herein.

The above are only implementations of the disclosure. However, the protection scope of the disclosure is not limited here. Changes and substitutions that may be easily considered by those skilled in the art shall be included within the protection scope of the disclosure. Thus, the protection scope of the disclosure shall be subject to the protection scope of claims.

## Claims

1. A path establishment method, performed by a first network element, comprising:
determining, by the first network element, to establish a user plane path between the first network element and an access network device, and sending, by the first network element, a first message to a second network element and/or a second message to a third network element, wherein the first message and the second message are configured to request establishing the user plane path between the first network element and the access network device.

2. The method of claim 1, wherein determining to establish the user plane path between the first network element and the access network device comprises:
receiving first information, wherein the first information is associated with a first service; and
determining whether to establish the user plane path between the first network element and the access network device according to at least one of the first information, a capability of the access network device, a network congestion status, or a capability of a core network.

3. The method of claim 2, wherein the first information comprises at least one of:
access network device information, wherein the access network device information indicates a target access network device of the first service;
service area information, wherein the service area information indicates a target area of the first service;
service location information, wherein the service location information indicates a target location of the first service;
a requested service data type of the first service; or
requested quality of service (QoS) information of service data of the first service.

4. The method of any of claims 1-3, wherein the first message comprises at least one of:
first indication information, wherein the first indication information indicates to establish the user plane path between the first network element and the access network device;
information of the access network device;
service area information, wherein the service area information indicates a target area of a first service;
service location information, wherein the service location information indicates a target location of a first service;
user plane information of the first network element; or
identification information of the user plane path.

5. The method of claim 4, wherein the user plane information of the first network element comprises at least one of:
a network element identifier (ID) of the first network element; or
an Internet protocol (IP) address of the first network element.

6. The method of claim 4, wherein the identification information of the user plane path comprises:
a packet data unit (PDU) session ID corresponding to the user plane path; or
a user plane path ID corresponding to the user plane path.

7. The method of claim 4, wherein the information of the access network device comprises at least one of:
an identifier of the access network device;
an IP address of the access network device;
single network slice selection assistance information (S-NSSAI) supported by the access network device;
a cell identity (CI) list supported by the access network device; or
a tracking area identifier (TAI) list supported by the access network device.

8. The method of any of claims 1-3, wherein the second message comprises at least one of:
first indication information, wherein the first indication information indicates to establish the user plane path between the first network element and the access network device;
information of the access network device;
service area information, wherein the service area information indicates a target area of a first service;
service location information, wherein the service location information indicates a target location of a first service;
user plane information of the first network element;
second information, wherein the second information is configured to request data associated with a first service; or
identification information of the user plane path.

9. The method of any of claims 1-8, further comprising:
receiving a first response sent by the second network element and/or the third network element, wherein the first response comprises at least one of:
second indication information, wherein the second indication information indicates that the user plane path between the first network element and the access network device is accepted;
information of the access network device;
identification information of the user plane path; or
address information of a user plane path of the access network device.

10. The method of any of claims 1-9, further comprising at least one of:
sending third information to the access network device, wherein the third information comprises at least one of second information, user plane information of the first network element, or identification information of the user plane path; or
receiving a service data packet sent by the access network device via the user plane path.

11. The method of claim 10, wherein sending the third information to the access network device comprises:
sending the third information to the access network device via the user plane path and/or a control plane path.

12. The method of claim 11, wherein sending the third information to the access network device via the control plane path comprises:
sending the third information to the access network device via the third network element.

13. A path establishment method, performed by a second network element, comprising:
receiving, by the second network element, a first message sent by a first network element and/or a first request sent by a third network element, wherein the first message and the first request are configured to indicate to establish a user plane path between the first network element and an access network device;
determining, by the second network element, a fourth network element according to the first message and/or the first request, wherein the fourth network element is configured to provide a user plane function; and
sending, by the second network element, fourth information to the access network device via the third network element, wherein the fourth information comprises identification information of the user plane path and/or core network tunnel information of the fourth network element, and the core network tunnel information of the fourth network element indicates the fourth network element.

14. The method of claim 13, further comprising:
determining a user plane path identifier (ID) corresponding to the user plane path; and
creating a context, wherein the context is configured to store related information of the user plane path, and the user plane path is associated with at least one of a data network name (DNN) of a first service, single network slice selection assistance information (S-NSSAI) of a first service, or the access network device.

15. The method of claim 14, wherein the context comprises:
a context related to the user plane path; or
a packet data unit (PDU) session context corresponding to the user plane path.

16. The method of any of claims 13-15, wherein the first request comprises at least one of:
identification information of the user plane path;
information of the access network device;
service area information, wherein the service area information indicates a target area of a first service;
service location information, wherein the service location information indicates a target location of a first service; or
user plane information of the first network element.

17. The method of any of claims 13-16, wherein the fourth information further comprises at least one of:
information of the access network device;
service area information, wherein the service area information indicates a target area of a first service;
service location information, wherein the service location information indicates a target location of a first service;
user plane information of the first network element;
a requested quality of service (QoS) flow; or
related QoS parameters of a requested QoS flow.

18. The method of any of claims 13-17, wherein after determining the fourth network element, the method further comprises:
establishing an N4 session with the fourth network element.

19. The method of any of claims 13-18, wherein before sending the fourth information to the access network device via the third network element, the method further comprises:
determining the third network element according to the first message and/or the first request.

20. The method of any of claims 13-19, further comprising:
receiving fifth information sent by the third network element, wherein the fifth information comprises identification information of the user plane path and/or access network tunnel information of the access network device, and the access network tunnel information indicates user plane path information of the access network device; and
sending a third message to the fourth network element, wherein the third message is configured to provide the access network tunnel information and/or the identification information of the user plane path to the fourth network element, for establishing the user plane path with the access network device.

21. The method of claim 20, wherein before receiving the fifth information sent by the third network element, the method further comprises:
subscribing to the fifth information by the second network element from the third network element.

22. The method of any of claims 13-21, wherein the fifth information further comprises first capability information, wherein the first capability information indicates whether a service data packet generated by the access network device comprises a destination address of the service data packet packaged using user plane information of the first network element.

23. The method of claim 22, wherein the third message further comprises a forwarding rule, wherein the forwarding rule indicates a rule for the fourth network element to forward the service data packet, and the forwarding rule is determined based on the first capability information.

24. The method of claim 23, wherein the forwarding rule comprises at least one of:
a first rule, wherein the first rule indicates to forward a service data packet associated with a QoS flow identifier (QFI); or
a second rule, wherein the second rule indicates to forward a service data packet according to a destination address of the service data packet.

25. The method of claim 24, wherein before sending the third message to the fourth network element, the method further comprises:
determining that the forwarding rule is the first rule in a case where the first capability information indicates that the service data packet generated by the access network device does not comprise the destination address of the service data packet packaged using the user plane information of the first network element;
determining that the forwarding rule is the second rule in a case where the first capability information indicates that the service data packet generated by the access network device comprises the destination address of the service data packet packaged using the user plane information of the first network element.

26. The method of any of claims 20-25, further comprising:
sending a first response to the first network element, wherein the first response comprises at least one of:
second indication information, wherein the second indication information indicates that the user plane path between the first network element and the access network device is accepted;
information of the access network device;
identification information of the user plane path; or
address information of a user plane path of the access network device.

27. The method of any of claims 20-25, further comprising:
sending a second response to the third network element, wherein the second response comprises at least one of:
second indication information, wherein the second indication information indicates that the user plane path between the first network element and the access network device is accepted;
information of the access network device;
identification information of the user plane path; or
address information of a user plane path of the access network device.

28. A path establishment method, performed by a third network element, comprising at least one of:
receiving third information sent by a first network element, and sending the third information to an access network device, wherein the third information comprises at least one of second information, user plane information of the first network element, or identification information of a user plane path, wherein the second information is configured to request data associated with a first service, and the third information is configured to request the access network device to transmit data requested by the second information via the user plane path; or
sending a fourth message to an access network device, wherein the fourth message comprises at least one of user plane information of a first network element, second information, or identification information of a user plane path, and the fourth message is configured to request the access network device to transmit data requested by the second information via the user plane path.

29. The method of claim 28, further comprising:
receiving, by the third network element, fourth information sent by a second network element, wherein the fourth information comprises identification information of the user plane path and/or core network tunnel information of the fourth network element, the core network tunnel information of the fourth network element indicates the fourth network element, and the fourth information is configured to establish the user plane path between the first network element and the access network device; and
sending, by the third network element, the fourth information to the access network device.

30. The method of claim 29, wherein the fourth information further comprises at least one of:
information of the access network device;
service area information, wherein the service area information indicates a target area of a first service;
service location information, wherein the service location information indicates a target location of a first service;
user plane information of the first network element;
a requested quality of service (QoS) flow; or
related QoS parameters of a requested QoS flow.

31. The method of claim 29 or 30, further comprising:
receiving fifth information sent by the access network device, wherein the fifth information comprises identification information of the user plane path and/or access network tunnel information of the access network device, the access network tunnel information indicates user plane path information of the access network device, and the fifth information is configured to establish the user plane path between the first network element and the access network device; and
sending the fifth information to the third network element.

32. The method of any of claims 29-31, wherein before receiving by the third network element, the fourth information sent by the second network element, the method further comprises:
receiving a second message sent by the first network element, wherein the second message is configured to request establishment of the user plane path between the first network element and the access network device; and
sending a first request to the second network element, wherein the first request is configured to indicate to establish the user plane path between the first network element and the access network device.

33. The method of claim 32, further comprising:
receiving a second response sent by the second network element, wherein the second response comprises at least one of:
second indication information, wherein the second indication information indicates that the user plane path between the first network element and the access network device is accepted;
information of the access network device;
identification information of the user plane path; or
address information of the user plane path.

34. The method of claim 33, further comprising:
sending a first response to the first network element, wherein the first response comprises at least one of:
second indication information, wherein the second indication information indicates that the user plane path between the first network element and the access network device is accepted;
information of the access network device;
identification information of the user plane path; or
address information of the user plane path.

35. A path establishment method, performed by an access network device, comprising:
receiving third information sent by a first network element and/or a fourth message sent by a third network element, wherein the third information comprises at least one of second information, user plane information of the first network element, or identification information of a user plane path, the fourth message comprises at least one of user plane information of the first network element, second information or identification information of a user plane path, wherein the second information is configured to request data associated with a first service, and the third information and the fourth message are configured to request the access network device to transmit data requested by the second information via a user plane path;
determining service data of the first service, and packaging the service data of the first service into a service data packet; and
sending the service data packet to the first network element via the user plane path.

36. The method of claim 35, further comprising:
receiving, by the access network device, fourth information sent by a third network element, wherein the fourth information comprises identification information of a user plane path and/or core network tunnel information of a fourth network element, the core network tunnel information of the fourth network element indicates the fourth network element, and the fourth information is configured to establish the user plane path between the first network element and the access network device;
sending fifth information to the third network element, wherein the fifth information comprises the identification information of the user plane path and/or access network tunnel information of the access network device, wherein the access network tunnel information indicates user plane path information of the access network device, and the fifth information is configured to establish the user plane path between the first network element and the access network device.

37. The method of claim 36, wherein the fifth information further comprises first capability information, wherein the first capability information is configured to indicate whether a service data packet generated by the access network device comprises a destination address of the service data packet packaged using the user plane information of the first network element.

38. The method of any of claims 35-37, wherein the service data packet comprises a destination address of the service data packet packaged using the user plane information of the first network element, or the service data packet does not comprise a destination address of the service data packet packaged using the user plane information of the first network element.

39. The method of claim 35, wherein receiving the third information sent by the first network element comprises:
receiving the third information sent by the first network element via the user plane path and/or a control plane path.

40. The method of claim 39, wherein receiving the third information sent by the first network element via the control plane path comprises:
receiving the third information sent by the first network element via the third network element.

41. A path establishment method, applied in a communication system comprising an access network device, a first network element, a second network element, a third network element and a fourth network element, the method comprising at least one of:
determining by the first network element, to establish a user plane path between the first network element and the access network device, and sending by the first network element, a first message to the second network element, wherein the first message is configured to request establishment of the user plane path between the first network element and the access network device;
determining by the second network element, the fourth network element according to the first message, wherein the fourth network element is configured to provide a user plane function;
sending by the second network element, fourth information to the third network element, wherein the fourth information comprises identification information of the user plane path and/or core network tunnel information of the fourth network element, and the core network tunnel information of the fourth network element indicates the fourth network element;
receiving by the third network element, the fourth information sent by the second network element;
sending by the third network element, the fourth information to the access network device;
receiving by the access network device, the fourth information sent by the third network element;
sending by the access network device, fifth information to the third network element, wherein the fifth information comprises identification information of the user plane path and/or access network tunnel information of the access network device, and the access network tunnel information indicates user plane path information of the access network device;
receiving by the third network element, the fifth information;
sending by the third network element, the fifth information to the second network element;
receiving by the second network element, the fifth information sent by the third network element;
sending by the second network element, a third message to the fourth network element, wherein the third message is configured to provide the access network tunnel information and/or the identification information of the user plane path to the fourth network element, for establishing the user plane path with the access network device;
sending by the second network element, a first response to the first network element, wherein the first response comprises at least one of second indication information, information of the access network device, the identification information of the user plane path, or address information of a user plane path of the access network device, wherein the second indication information indicates that the user plane path between the first network element and the access network device is accepted;
receiving by the first network element, the first response;
sending by the first network element, third information to the access network device via the user plane path and/or a control plane path, wherein the third information comprises at least one of second information, user plane information of the first network element, or identification information of the user plane path;
receiving by the access network device, the third information sent by the first network element;
determining by the access network device, service data of a first service, and packaging the service data of the first service into a service data packet, wherein the service data packet comprises a destination address of the service data packet packaged using the user plane information of the first network element, or the service data packet does not comprise a destination address of the service data packet packaged using the user plane information of the first network element;
sending by the access network device, the service data packet to the first network element via the user plane path;
receiving by the first network element, the service data packet sent by the access network device via the user plane path.

42. A path establishment method, applied in a communication system comprising an access network device, a first network element, a second network element, a third network element, and a fourth network element, the method comprising at least one of:
determining by the first network element, to establish a user plane path between the first network element and the access network device, and sending by the first network element, a second message to the third network element, wherein the second message is configured to request establishment of the user plane path between the first network element and the access network device;
receiving by the third network element, the second message;
sending by the third network element, a first request to the second network element, wherein the first request is configured to indicate to establish the user plane path between the first network element and the access network device;
determining by the second network element, the fourth network element according to the first request, wherein the fourth network element is configured to provide a user plane function;
sending by the second network element, fourth information to the third network element, wherein the fourth information comprises identification information of the user plane path and/or core network tunnel information of the fourth network element, and the core network tunnel information of the fourth network element indicates the fourth network element;
receiving by the third network element, the fourth information sent by the second network element;
sending by the third network element, the fourth information to the access network device;
receiving by the access network device, the fourth information sent by the third network element;
sending by the access network device, fifth information to the third network element, wherein the fifth information comprises identification information of the user plane path and/or access network tunnel information of the access network device, and the access network tunnel information indicates user plane path information of the access network device;
receiving by the third network element, the fifth information;
sending by the third network element, the fifth information to the second network element;
receiving by the second network element, the fifth information sent by the third network element;
sending by the second network element, a third message to the fourth network element, wherein the third message is configured to provide the access network tunnel information and/or the identification information of the user plane path to the fourth network element, for establishing the user plane path with the access network device;
sending by the second network element, a second response to the third network element, wherein the second response comprises at least one of second indication information, information of the access network device, the identification information of the user plane path, or address information of a user plane path of the access network device, wherein the second indication information indicates that the user plane path between the first network element and the access network device is accepted;
receiving by the third network element, the second response;
sending by the third network element, a fourth message to the access network device, wherein the fourth message comprises at least one of second information, user plane information of the first network element, or identification information of the user plane path, wherein the second information is configured to request data associated with a first service;
determining by the access network device, service data of the first service, and packaging the service data of the first service into a service data packet, wherein the service data packet comprises a destination address of the service data packet packaged using the user plane information of the first network element, or the service data packet does not comprise a destination address of the service data packet packaged using the user plane information of the first network element;
sending by the access network device, the service data packet to the first network element via the user plane path;
receiving by the first network element, the service data packet sent by the access network device via the user plane path.

43. A first network element, comprising:
a sending module, configured to determine to establish a user plane path between the first network element and an access network device, and send a first message to a second network element and/or a second message to a third network element, wherein the first message and the second message are configured to request establishing the user plane path between the first network element and the access network device.

44. A second network element, comprising:
a receiving module, configured to receive a first message sent by a first network element and/or a first request sent by a third network element, wherein the first message and the first request are configured to indicate to establish a user plane path between the first network element and an access network device;
a processing module, configured to determine a fourth network element according to the first message and/or the first request, wherein the fourth network element is configured to provide a user plane function; and
a sending module, configured to send fourth information to the access network device via a third network element, wherein the fourth information comprises identification information of the user plane path and/or core network tunnel information of the fourth network element, and the core network tunnel information of the fourth network element indicates the fourth network element.

45. A third network element, comprising:
a receiving module, configured to receive third information sent by a first network element, and send the third information to an access network device, wherein the third information comprises at least one of second information, user plane information of the first network element, or identification information of a user plane path, wherein the second information is configured to request data associated with a first service, and the third information is configured to request the access network device to transmit data requested by the second information via the user plane path; and
a sending module, configured to send a fourth message to an access network device, wherein the fourth message comprises at least one of user plane information of a first network element, second information, or identification information of a user plane path, and the fourth message is configured to request the access network device to transmit data requested by the second information via the user plane path.

46. An access network device, comprising:
a receiving module, configured to receive third information sent by a first network element and/or a fourth message sent by a third network element, wherein the third information comprises at least one of second information, user plane information of the first network element, or identification information of a user plane path, the fourth message comprises at least one of user plane information of the first network element, second information or identification information of a user plane path, wherein the second information is configured to request data associated with a first service, and the third information and the fourth message are configured to request the access network device to transmit data requested by the second information via a user plane path;
a processing module, configured to determine service data of the first service, and packaging the service data of the first service into a service data packet; and
a sending module, configured to send the service data packet to the first network element via the user plane path.

47. A communication device, comprising:
one or more processors;
wherein, the one or more processors are configured to call instructions to cause the communication device to implement the path establishment method of any of claims 1-12, 13-27, 28-34, or 35-40.

48. A communication system, comprising a first network element, a second network element, a third network element, and an access network device, wherein the first network element is configured to implement the path establishment method of any of claims 1-12, the second network element is configured to implement the path establishment method of any of claims 13-27, the third network element is configured to implement the path establishment method of any of claims 28-34, and the access network device is configured to implement the path establishment method of any of claims 35-40.

49. A storage medium storing instructions, wherein when the instructions are run on a communication device, the communication device is caused to implement the path establishment method of any of claims 1-12, 13-27, 28-34, or 35-40.
